# EUROPEAN PATENT APPLICATION

(11) **EP 4 506 921 A1**
(43) Date of publication of application: **12.02.2025**
(21) Application number: 23784645.6
(22) Date of filing: 24.03.2023
(51) Int. Cl.: G08G 1/08, G08G 1/04, G08G 1/095, H04N 7/18

(54) **DETECTION SYSTEM, DETECTION DEVICE, AND DETECTION DEVICE INSTALLATION METHOD**

(30) Priority: 08.04.2022 JP 2022064297
(71) Applicant: SUMITOMO ELECTRIC INDUSTRIES, LTD., Osaka-shi, Osaka 541-0041 (JP)
(72) Inventor: ASANO Shunya, Osaka-shi, Osaka 541-0041 (JP)
(74) Representative: Boult Wade Tennant LLP
(86) International application number: PCT/JP2023/011684
(87) International publication number: WO 2023/195355

(57) **Abstract**

This detection system comprises: a first sensor that is installed above a first area adjacent to a pedestrian crossing such that a first detection area in which the first sensor detects objects includes at least part of the first area; and a second sensor that has detection properties differing from those of the first sensor and is installed above the first area and such that a second detection area in which the second sensor detects objects includes at least part of pedestrian crossing.

## Description

### TECHNICAL FIELD

The present disclosure relates to a detection system, a detection device, and a method of installing a detection device.

The present disclosure contains subject matter related to Japanese Patent Application No. 2022-064297 filed in the Japan Patent Office on April 8, 2022, the entire contents of which are incorporated herein by reference.

### BACKGROUND ART

Sensors that detect objects (such as a vehicle and a pedestrian) on roads are installed on roadsides in order to grasp traffic situations of the roads. Various sensors such as an image sensor or a millimeter-wave sensor are known as the existing sensors (roadside sensors) that are installed on the roadside. In recent years, it has been proposed that a composite sensor that consists of multiple sensors that have different detection characteristics is used as a roadside sensor. For example, the composite sensor includes an image sensor and a millimeter-wave sensor. The composite sensor integrates sensor data from the image sensor and sensor data from the millimeter-wave sensor and consequently increases the precision of detection when an object on a road is detected.

A road sensing system that uses such a composite sensor is disclosed in PTL 1 described later. The road sensing system in PTL 1 detects an object on a road by using multiple sensors. The multiple sensors include a radar sensor having a first field of view and a camera (an image sensor) having a second field of view. The multiple sensors have a common field of view in which the first field of view and the second field of view at least partly overlap. In the common field of view, sensor data from the radar sensor and sensor data from the camera are integrated.

The road sensing system in PTL 1 is capable of detecting an pedestrian who crosses a pedestrian crossing. The sensors are installed at positions at which the sensors obliquely look down on the target pedestrian crossing (positions away from the target pedestrian crossing), and the common field of view that corresponds to an overlapping portion of the first field of view and the second field of view is located at the pedestrian crossing. The road sensing system notifies a vehicle that approaches the pedestrian crossing of the result of detection when the pedestrian crossing is detected in the common field of view.

### CITATION LIST

### PATENT LITERATURE

PTL 1: U.S. Patent Application Publication No. 2018/0350231

### SUMMARY OF INVENTION

A detection system according to an aspect of the present disclosure includes a first sensor installed above a first area adjacent to a pedestrian crossing, the first sensor having a first detection target area in which the first sensor detects an object, the first detection target area containing at least a portion of the first area, and a second sensor installed above the first area, the second sensor having a detection characteristic different from that of the first sensor and having a second detection target area in which the second sensor detects an object, the second detection target area containing at least a portion of the pedestrian crossing.

A detection device according to another aspect of the present disclosure a first sensor, a second sensor having a detection characteristic different from that of the first sensor, and a housing configured to unitize the first sensor and the second sensor. The housing is installed on a support member provided in the first area adjacent to a pedestrian crossing. In a state in which the housing is installed on the support member, a first detection target area in which the first sensor detects an object contains at least a portion of the first area, and a second detection target area in which the second sensor detects an object contains at least a portion of the pedestrian crossing.

A method of installing a detection device according to another aspect of the present disclosure is a method of installing a detection device on a support member provided above a first area adjacent to a pedestrian crossing. The detection device includes an image sensor a detection target area of which is at least a portion of the first area, a millimeter-wave sensor a detection target area of which is the pedestrian crossing, a housing configured to unitize the image sensor and the millimeter-wave sensor, an installation angle adjustment device configured to adjust an installation angle of the housing with respect to the support member, and an imaging direction adjustment device configured to adjust an imaging direction of the image sensor. The method includes mounting the housing on the support member, adjusting the imaging direction of the image sensor to a detection direction of the millimeter-wave sensor in a manner in which an operator operates the imaging direction adjustment device, adjusting the installation angle of the housing such that the detection target area of the millimeter-wave sensor contains at least a portion of the pedestrian crossing in a manner in which the operator operates the installation angle adjustment device, based on image information from the image sensor, and adjusting the imaging direction of the image sensor such that the detection target area of the image sensor contains at least a portion of the first area in a manner in which the operator operates the imaging direction adjustment device, based on the image information from the image sensor.

### BRIEF DESCRIPTION OF DRAWINGS

FIG. 1 is a diagram for describing the entire structure of a detection system according to a first embodiment.
FIG. 2 is a plan view for describing the detection system illustrated in FIG. 1.
FIG. 3 is a diagram for describing the detection system illustrated in FIG. 1.
FIG. 4 is a diagram for describing the detection system illustrated in FIG. 1.
FIG. 5 is a block diagram illustrating an example of the structure of the detection system illustrated in FIG. 1.
FIG. 6 is a block diagram illustrating an example of the structure of an integrated processing unit.
FIG. 7 is a flowchart illustrating an example of the control structure of a program that is run by the detection system illustrated in FIG. 1.
FIG. 8 illustrates the detailed flow of a step S1000 in FIG. 7.
FIG. 9 illustrates the detailed flow of a step S1020 in FIG. 7.
FIG. 10 illustrates an example of the operation of the detection system illustrated in FIG. 1.
FIG. 11 illustrates an example of the operation of the detection system illustrated in FIG. 1.
FIG. 12 is a diagram for describing a detection system in a comparative example.
FIG. 13 is a plan view for describing a detection system according to a first modification.
FIG. 14 is a plan view for describing a detection system according to a second modification.
FIG. 15 is a block diagram illustrating an example of the structure of a detection system according to a second embodiment.
FIG. 16 is a diagram for describing the detection system illustrated in FIG. 15.
FIG. 17 is a flowchart illustrating an example of the control structure of a program that is run by the detection system illustrated in FIG. 15.
FIG. 18 is a perspective view of an example of the structure of a detection system (a detection device) according to a third embodiment.
FIG. 19 is a side view of an example of the structure of the detection system (the detection device) illustrated in FIG. 18.
FIG. 20 is a block diagram illustrating an example of the structure of the detection system (the detection device) illustrated in FIG. 18.
FIG. 21 is a block diagram illustrating an example of the structure of a detection device according to a third modification.
FIG. 22 is a block diagram illustrating an example of the structure of a detection device according to a fourth modification.
FIG. 23 is a perspective view of an example of the structure of a detection system (a detection device) according to the fourth embodiment.
FIG. 24 is a side view of an example of the structure of the detection system (the detection device) illustrated in FIG. 23.
FIG. 25 is a block diagram illustrating an example of the structure of the detection system (the detection device) illustrated in FIG. 23.
FIG. 26 is a block diagram illustrating an example of the structure of an imaging direction adjustment device.
FIG. 27 is a block diagram illustrating an example of the structure of an installation angle adjustment device.
FIG. 28 illustrates an example of a terminal device that communicates with the detection system (the detection device) illustrated in FIG. 23.
FIG. 29 is a sequence diagram illustrating a process of installing and adjusting the detection device illustrated in FIG. 23.
FIG. 30 is a diagram for describing a detection system according to a fifth embodiment.
FIG. 31 is a diagram for describing the detection system illustrated in FIG. 30.
FIG. 32 is a flowchart illustrating an example of the control structure of a program that is run by the detection system illustrated in FIG. 30.
FIG. 33 is a diagram for describing another example of the structure of the detection system.
FIG. 34 is a diagram for describing another example of the structure of the detection system.

### DETAILED DESCRIPTION

### [Problems to be Solved by Present Disclosure]

As for the road sensing system in PTL 1, the sensors are installed at the positions at which the sensors obliquely look down on the target pedestrian crossing as described above. However, an existing support member (such as a pole) for supporting the sensors is not necessarily provided at the positions. In addition, if a detection area is enlarged up to a pedestrian wait area (simply referred to below as a "wait area") near the pedestrian crossing, it is necessary to change the positions of the installed sensors accordingly. In this case, it is increasingly difficult to install the sensors on an existing support member. In this case, it is necessary to provide a new support member for installing the sensors. Construction costs are additionally needed to provide the new support member. For this reason, the burden of costs increases.

A traffic light pole for pedestrians is typically provided near the wait area. If the traffic light pole can be used to install the sensors, the burden of costs can be inhibited from increasing. As for the road sensing system in PTL 1, however, the positions of the installed sensors are restricted to detect the pedestrians in the pedestrian crossing in the common field of view. For this reason, the existing traffic light pole is difficult to use to install the sensors.

The present disclosure has been accomplished to solve the problems described above, and it is an object of the present disclosure to provide a detection system and a detection device that enable a sensor to have a high degree of freedom of installation and that are capable of detecting a wider area.

It is another object of the present disclosure to provide a method of installing a detection device that has a high degree of freedom of installation and that is capable of detecting a wider area.

### [Advantageous Effects of Present Disclosure]

According to the present disclosure, a detection system and a detection device that enable a sensor to have a high degree of freedom of installation and that are capable of detecting a wider area can be provided. In addition, according to the present disclosure, a method of installing a detection device that has a high degree of freedom of installation and that is capable of detecting a wider area can be provided.

### [Summary of Embodiment of Present Disclosure]

A preferred embodiment of the present disclosure will be listed and described. At least portions of the embodiment described below may be freely combined.

(1) A detection system according to a first aspect of the present disclosure includes a first sensor installed above a first area adjacent to a pedestrian crossing, the first sensor having a first detection target area in which the first sensor detects an object, the first detection target area containing at least a portion of the first area, and a second sensor installed above the first area, the second sensor having a detection characteristic different from that of the first sensor and having a second detection target area in which the second sensor detects an object, the second detection target area containing at least a portion of the pedestrian crossing.

The first sensor has the detection target area that contains at least the portion of the first area adjacent to the pedestrian crossing. The second sensor has the detection target area that is at least the portion of the pedestrian crossing. This enables the first sensor to be installed near the pedestrian crossing and enables the second sensor to be installed near the first sensor. Accordingly, the first sensor and the second sensor can be installed near the pedestrian crossing, which is difficult in existing cases. That is, the degree of freedom of installation of the sensors can be increased. The degree of freedom of installation of the sensors is increased, an existing support member can consequently be easily used to install the sensors, and accordingly, the burden of costs due to a new support member can be inhibited from increasing.

In addition, the first sensor and the second sensor have the different detection target areas, and consequently, the objects in the wider area can be detected. In addition, the use of the first sensor for detection of the object in the first area and the use of the second sensor that has the detection characteristic different from that of the first sensor for detection of the object in the pedestrian crossing enable sensors suitable to detect the objects in the areas to be used as the first sensor and the second sensor. This enables the precision of detection of the objects to be inhibited from being reduced.

(2) As for (1) described above, at least the portion of the first detection target area may overlap the second detection target area in the first area or the pedestrian crossing. This enables information about the object that is detected by the first sensor to be easily provided to the second sensor. The second sensor can recognize the object that moves from the first area to the pedestrian crossing by receiving the information about the object from the first sensor, and accordingly, the object can be tracked in the pedestrian crossing.

(3) As for (2) described above, an overlap area in which the first detection target area and the second detection target area overlap may be smaller than the first detection target area except for the overlap area and the second detection target area except for the overlap area. This enables the areas in which the objects are detected can be easily enlarged. In addition, the detection target area of the second sensor may be larger than the detection target area of the first sensor.

(4) As for (1) to (3) described above, the first sensor may include an image sensor configured to detect an object present in the first area, and the second sensor may include a millimeter-wave sensor configured to detect an object present in the pedestrian crossing. This enables the precision of detection of the objects can be effectively inhibited from being reduced when the objects in the areas are detected by the sensors.

(5) As for (1) to (4) described above, the detection system may include a housing configured to unitize the first sensor and the second sensor. This enables the multiple sensors to be easily installed.

(6) As for (5) described above, the housing may have a first surface and a second surface intersecting with the first surface, the first sensor may be provided on the second surface of the housing, and the second sensor may be provided at a position corresponding to that of the first surface in the housing. This enables the sensors to be easily installed such that the detection target areas of the first sensor and the second sensor are the first area and the pedestrian crossing.

(7) As for (6) described above, the millimeter-wave sensor may include an antenna configured to emit a detection signal in a millimeter wave band and to receive a reflected wave of the emitted detection signal, the reflected wave being reflected by an object, and the antenna may be provided in parallel with the first surface in the housing.

(8) As for (4) to (7) described above, the detection system may include an imaging direction adjustment device configured to adjust an imaging direction of the image sensor. This enables the imaging direction of the image sensor to be easily adjusted.

(9) As for (1) to (8) described above, the detection system may include an illumination device configured to illuminate the first area. This enables the precision of recognition of the image sensor to be inhibited from being reduced due to reduced illuminance.

(10) As for (1) to (9) described above, the first sensor may be installed on a support member provided in the first area, and the second sensor may be installed on the support member on which the first sensor is installed. This enables an existing support member to be more easily used to install the sensors.

(11) As for (5) to (9) described above, the housing may be installed on a support member provided in the first area, and an installation angle adjustment device configured to adjust an installation angle of the housing may be further included. This enables the installation angle of the housing, hence, the installation angles of the sensors to be easily adjusted.

(12) As for (1) to (11) described above, the detection system may include a processing unit configured to identify a kind and a direction of the object present in the first area, based on sensor data from the first sensor and to perform a process of causing the second sensor to track the identified object in the pedestrian crossing depending on a result of identification. This enables the object to be tracked in collaboration with the recognition of the object in the first area.

(13) As for (12) described above, the processing unit may further perform a predetermined process depending on the result of identification of the object in the first area or a situation of tracking the object in the pedestrian crossing. This enables information about the situation of tracking to be effectively used for assistance with traffic safety.

(14) As for (13) described above, the predetermined process may include at least notifying a vehicle trying to enter the pedestrian crossing of presence of the object, recording a trajectory along which the object moves in the pedestrian crossing, or controlling a pedestrian traffic light provided for the pedestrian crossing. This enables the assistance with the traffic safety to be more easily provided.

(15) A detection device according to a second aspect of the present disclosure includes a first sensor, a second sensor having a detection characteristic different from that of the first sensor, and a housing configured to unitize the first sensor and the second sensor. The housing is installed on a support member provided in the first area adjacent to a pedestrian crossing. In a state in which the housing is installed on the support member, a first detection target area in which the first sensor detects an object contains at least a portion of the first area, and a second detection target area in which the second sensor detects an object contains at least a portion of the pedestrian crossing.

Unitizing the multiple sensors by the housing enables the first sensor to be installed near the detection target area and enables the second sensor to be installed near the first sensor. Accordingly, the first sensor and the second sensor can be installed near the pedestrian crossing, which is difficult in the existing cases. That is, the degree of freedom of installation of the sensors can be increased. The degree of freedom of installation of the sensors is increased, and consequently, an existing support member can be easily used to install the sensors. As a result, the burden of costs due to a new support member can be inhibited from increasing.

The first sensor covers at least the portion of the first area adjacent to the pedestrian crossing as the detection target area, and the second sensor covers at least the portion of the pedestrian crossing as the detection target area. The first sensor and the second sensor have the different detection target areas, and consequently, the objects in the wider area can be detected. In addition, the use of the first sensor for detection of the object in the first area and the use of the second sensor that has the detection characteristic different from that of the first sensor for detection of the object in the pedestrian crossing enable sensors suitable to detect the objects in the areas to be used as the first sensor and the second sensor. This enables the precision of detection of the objects to be inhibited from being reduced.

(16) As for (15) described above, the detection device, the detection system may include an illumination device included in the housing and configured to illuminate the first area. This enables the precision of recognition of the first sensor to be inhibited from being reduced due to reduced illuminance.

(17) As for (15) or (16) described above, the first sensor may include an image sensor configured to detect an object present in the first area, and the second sensor may include a millimeter-wave sensor configured to detect an object present in the second area. This enables the precision of detection of the objects to be effectively inhibited from being reduced when the objects in the areas are detected by the sensors.

(18) A method of installing a detection device according to a third aspect of the present disclosure is a method of installing a detection device on a support member provided above a first area adjacent to a pedestrian crossing. The detection device includes an image sensor a detection target area of which is at least a portion of the first area, a millimeter-wave sensor a detection target area of which is the pedestrian crossing, a housing configured to unitize the image sensor and the millimeter-wave sensor, an installation angle adjustment device configured to adjust an installation angle of the housing with respect to the support member, and an imaging direction adjustment device configured to adjust an imaging direction of the image sensor. The method includes mounting the housing on the support member, adjusting the imaging direction of the image sensor to a detection direction of the millimeter-wave sensor in a manner in which an operator operates the imaging direction adjustment device, adjusting the installation angle of the housing such that the detection target area of the millimeter-wave sensor contains at least a portion of the pedestrian crossing in a manner in which the operator operates the installation angle adjustment device, based on image information from the image sensor, and adjusting the imaging direction of the image sensor such that the detection target area of the image sensor contains at least a portion of the first area in a manner in which the operator operates the imaging direction adjustment device, based on the image information from the image sensor. This enables the detection target area of the millimeter-wave sensor to be easily set to the pedestrian crossing and enables the detection target area of the image sensor containing at least the portion of the first area adjacent to the pedestrian crossing to be easily set. For this reason, the detection device that has an increased degree of freedom of installation and that is capable of detecting the wider area can be easily installed.

The present disclosure can be achieved not only as a detection system, a detection device, and a method of installing a detection device that have these features but also as a characteristic step that is performed by the detection system or the detection device or a program for causing a computer to perform a characteristic step that is performed in the method of installing the detection device, and a recording medium that records the program. In addition, the present disclosure can be achieved also as another system or device that includes the detection system or the detection device.

### [Details of Embodiments of Present Disclosure]

Specific examples of a detection system, a detection device, and a method of installing a detection device according to an embodiment of the present disclosure will now be described with reference to the drawings. In an example described according to the embodiment below, objects in a pedestrian crossing and a wait area near the pedestrian crossing are detected. According to the embodiment described below, like components are designated by using like reference numbers. The functions and names of these are the same. Accordingly, a detailed description for these is not repeated.

### (First Embodiment)

### [Entire Structure]

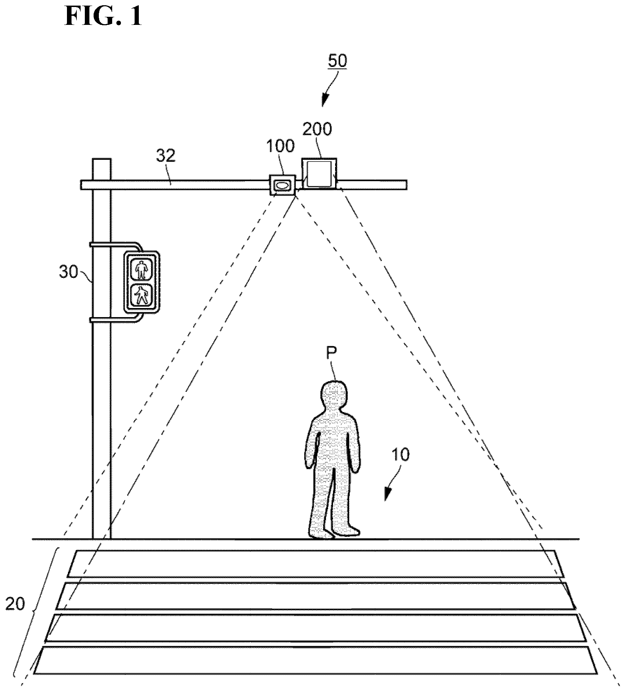

Referring to FIG. 1, a detection system 50 according to the present embodiment is installed on a roadside. The detection system 50 detects objects (such as a vehicle and a pedestrian) on a road by using roadside sensors. The detection system 50 includes multiple sensors that serve as the roadside sensors. For example, the multiple sensors include an image sensor 100 and a millimeter-wave sensor 200 that has detection characteristics different from those of the image sensor 100. The image sensor 100 is typically a camera. The image sensor 100 may be a monocular camera or a stereo camera. The millimeter-wave sensor 200 is a radar sensor that detects the distance, direction, and speed of a target object by using a radio wave in a millimeter wave band.

According to the present embodiment, the image sensor 100 mainly detects an object (for example, a person such as a waiting person P) in a wait area 10. The millimeter-wave sensor 200 mainly detects an object (for example, a person such as a crossing person) in a pedestrian crossing 20. The millimeter-wave sensor 200 has a function of tracking the detected object. The image sensor 100 and the millimeter-wave sensor 200 thus detect the objects in the different areas. The image sensor 100 also has a function of recognizing the object in the wait area 10. To recognize the object by the image sensor 100 means that the image sensor 100 obtains data that represents the type of the object as described later. The target that is recognized by the image sensor 100 is not limited to the type of the object but may be the direction of the person, the presence of the object that enters the pedestrian crossing from the wait area, or the presence of the crossing person who has crossed the pedestrian crossing. For example, the image sensor 100 identifies the direction of movement of the person by chronically tracking the movement of the person by using a Kalman filter before the person stops in the wait area 10 and recognizes the identified direction of movement as the direction of the person who stops in the wait area 10. In addition, the image sensor 100 identifies the direction of the line of sight of the person who stops in the wait area 10 or the direction from the back to the chest of the person by using image analysis and recognizes the identified direction as the direction of the person who stops in the wait area 10.

A traffic light pole 30 for pedestrians is provided near the wait area 10. The image sensor 100 and the millimeter-wave sensor 200 are installed on the traffic light pole 30 by using an arm member 32. The arm member 32 is mounted on the traffic light pole 30 so as to be located above the wait area 10. That is, the image sensor 100 and the millimeter-wave sensor 200 are mounted on the traffic light pole 30, which is an existing support member.

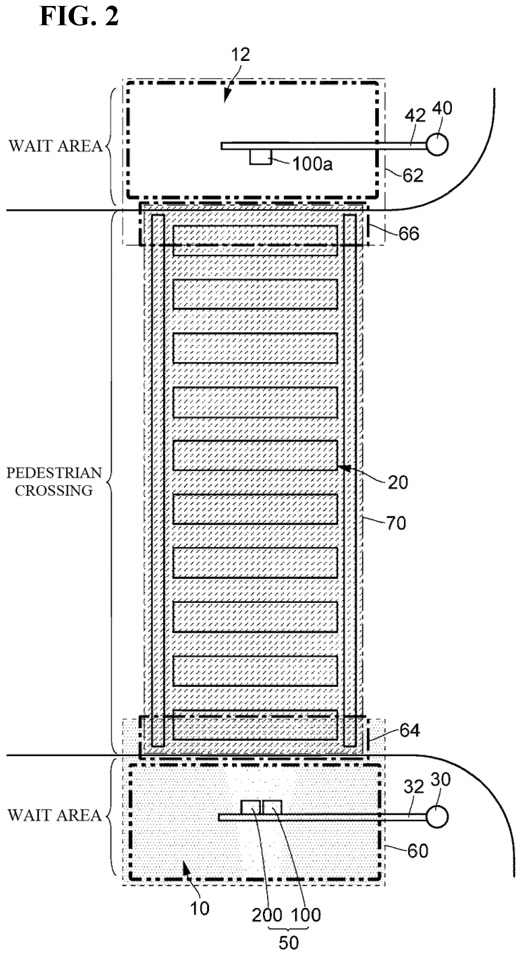

Referring to FIG. 2, a roadway extends in a direction intersecting with the movement direction of the pedestrian crossing, and sidewalks interpose the roadway and the pedestrian crossing therebetween. The roadway includes the pedestrian crossing, and the sidewalks include wait areas. Two lines that linearly extend along the roadway and that curve at intermediate positions are boundaries between the roadway and the sidewalks. The wait area 10 is located right below the image sensor 100, and the image sensor 100 has a detection target area 60 that contains the wait area 10 (a first area). The wait area is an area near the pedestrian crossing in which people wait until the people can start crossing the pedestrian crossing. The detection target area 60 of the image sensor 100 is preferably set so as to contain the entire wait area 10. The wait area has no clear boundary, and accordingly, the detection target area 60 of the image sensor 100 is set such that the target waiting person can be detected. For this reason, the detection target area 60 of the image sensor 100 is set so as to contain the wait area 10. The size of the wait area changes also depending on, for example, the scale of the pedestrian crossing, and accordingly, the detection target area 60 of the image sensor 100 is appropriately changed depending on, for example, the scale of the pedestrian crossing.

An area (a second area) that corresponds to the pedestrian crossing 20 is adjacent to the wait area 10. The millimeter-wave sensor 200 has a detection target area 70 that is the second area (the pedestrian crossing 20) adjacent to the wait area 10. The detection target area 70 of the millimeter-wave sensor 200 is preferably set so as to cover the entire pedestrian crossing 20. The detection target area 70 of the millimeter-wave sensor 200 may be set so as to cover a portion of the pedestrian crossing 20. In this case, the other area of the pedestrian crossing 20 may be contained in the detection target area of a sensor (such as the image sensor 100) other than the millimeter-wave sensor 200.

An image sensor 100a that is the same as the image sensor 100 is provided in a wait area 12 of the pedestrian crossing 20. A traffic light pole 40 for pedestrians is provided near the wait area 12. The image sensor 100a is installed on the traffic light pole 40 by using an arm member 42. The wait area 12 is located at a position right below the position at which the image sensor 100a is installed. The image sensor 100a has a detection target area 62 that contains the wait area 12 as in the image sensor 100 and consequently detects an object in the wait area 12.

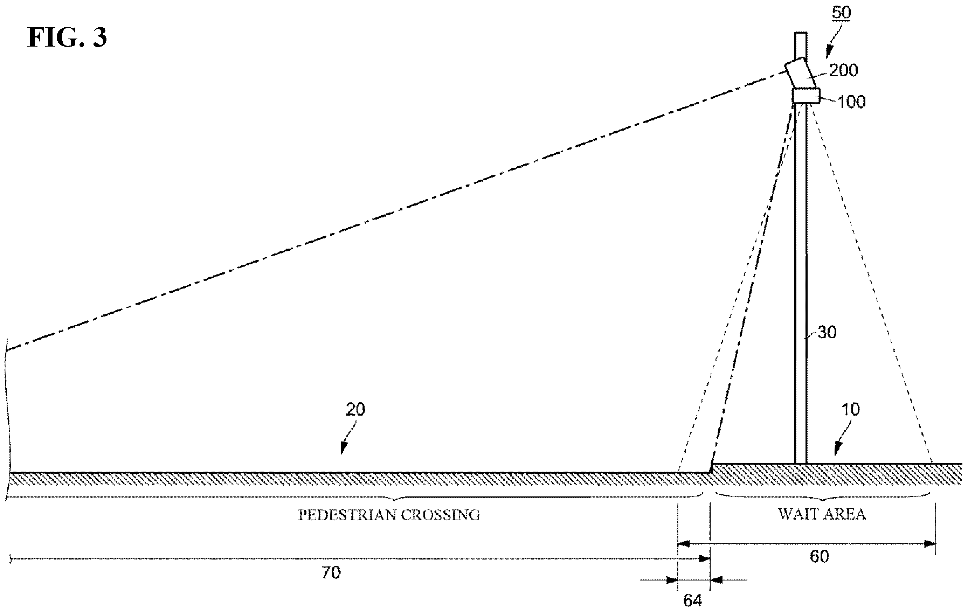

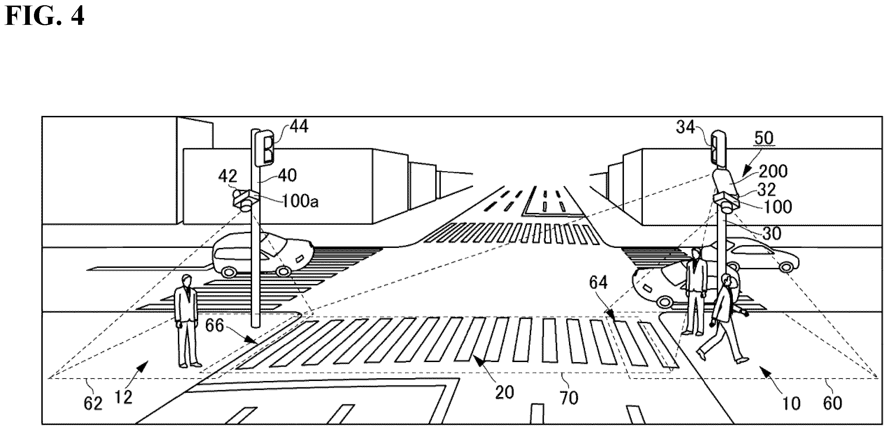

Referring to FIG. 3 and FIG. 4, the image sensor 100 is mounted so as to face downward such that the imaging direction indicates the wait area 10, that is, a captured target is an area located substantially right below. The image sensor 100a that is provided above the wait area 12 is mounted in the same manner. The millimeter-wave sensor 200 is mounted so as to obliquely look down on the pedestrian crossing 20. As illustrated in FIG. 4, a traffic light 34 is provided on the traffic light pole 30 on which the image sensor 100 and the millimeter-wave sensor 200 are installed, and a traffic light 44 is provided on the traffic light pole 40 on which the image sensor 100a is installed.

Referring to FIG. 2 again, at least a portion of the detection target area 60 of the image sensor 100 overlaps the detection target area 70 of the millimeter-wave sensor 200 in the pedestrian crossing 20 (the second area). As for the millimeter-wave sensor 200, at least a portion of the detection target area 70 of the millimeter-wave sensor 200 overlaps the detection target area 60 of the image sensor 100 in the wait area 10 (the first area). Consequently, the detection target area 60 of the image sensor 100 and the detection target area 70 of the millimeter-wave sensor 200 contain an overlap area 64. Similarly, as for the image sensor 100a that is provided above the wait area 12, the detection target area 62 of the image sensor 100a and the detection target area 70 of the millimeter-wave sensor 200 contain an overlap area 66.

Referring to FIG. 2 to FIG. 4, the detection target area 70 of the millimeter-wave sensor 200 is larger than the detection target area 60 of the image sensor 100. The overlap area 64 in which the detection target area 70 of the millimeter-wave sensor 200 and the detection target area 60 of the image sensor 100 overlap is smaller than the detection target area 60 of the image sensor 100 except for the overlap area 64 and the detection target area 70 of the millimeter-wave sensor 200 except for the overlap area 64. The detection target area 70 of the millimeter-wave sensor 200 is larger than the detection target area 62 of the image sensor 100a. The overlap area 66 in which the detection target area 70 of the millimeter-wave sensor 200 and the detection target area 62 of the image sensor 100a overlap is smaller than the detection target area 62 of the image sensor 100a except for the overlap area 66 and the detection target area 70 of the millimeter-wave sensor 200 except for the overlap area 66.

### [Hardware Structure]

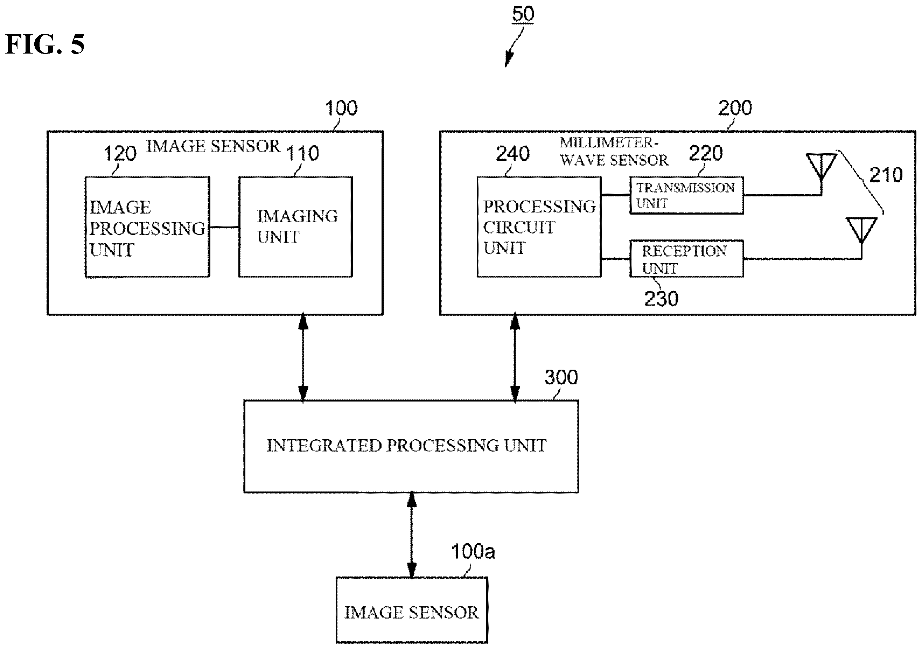

Referring to FIG. 5, the detection system 50 includes the image sensor 100, the millimeter-wave sensor 200, and an integrated processing unit 300. The image sensor 100 includes an imaging unit 110 and an image processing unit 120. For example, the imaging unit 110 includes a lens and an imaging element. The image processing unit 120 processes information captured by the imaging unit 110. The millimeter-wave sensor 200 includes an antenna 210 that transmits and receives radio waves, a transmission unit 220 that emits a radio wave (a detection signal) in the millimeter wave band toward the target object via the antenna 210, a reception unit 230 that receives a reflected wave of the emitted radio wave that is reflected by the target object via the antenna 210, and a processing circuit unit 240. The processing circuit unit 240 processes information about the transmission and reception of the radio wave with the transmission unit 220 and the reception unit 230 and consequently detects the distance, direction, and speed of the object. The image sensor 100 and the millimeter-wave sensor 200 synchronize time by obtaining time information from, for example, a NTP (Network Timing Protocol) server (not illustrated).

The integrated processing unit 300 performs various processes such as a process of integrating sensor data from the image sensor 100 and sensor data from the millimeter-wave sensor 200, a process of causing the millimeter-wave sensor 200 to track the object, and a process of controlling the traffic lights depending on, for example, the situations of tracking the object. The integrated processing unit 300 has a function of communicating with the image sensor 100a that is provided above the wait area 12. The image sensor 100a obtains the time information from, for example, the NTP server (not illustrated) and consequently synchronizes the time with the image sensor 100 and the millimeter-wave sensor 200. The detection system 50 may include the image sensor 100a that is provided above the wait area 12.

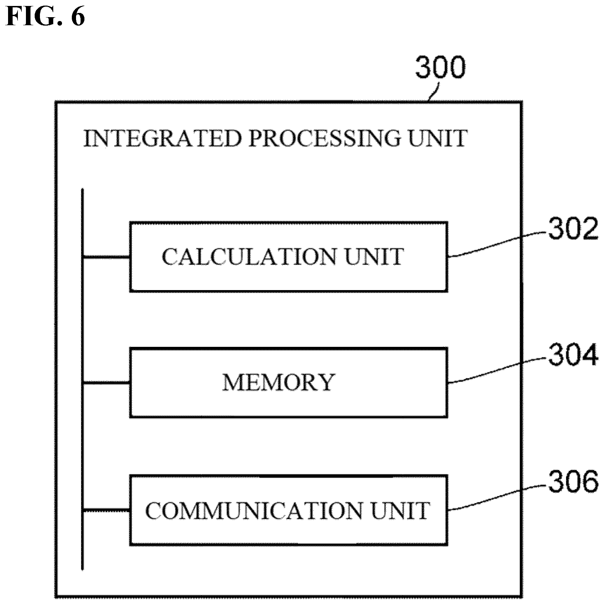

Referring to FIG. 6, the integrated processing unit 300 includes a calculation unit 302, a memory 304, and a communication unit 306. The calculation unit 302 includes an arithmetic element (a processor) such as a CPU (Central Processing Unit) or a MPU (Micro Processing Unit). An example of the memory 304 is a non-volatile storage device. Software (a computer program) that is run by the calculation unit 302 is stored in the memory 304 in advance. The communication unit 306 communicates with the sensors including the image sensor 100 and the millimeter-wave sensor 200 and devices such as the traffic lights for information with a wired cable or wirelessly.

### [Software Structure]

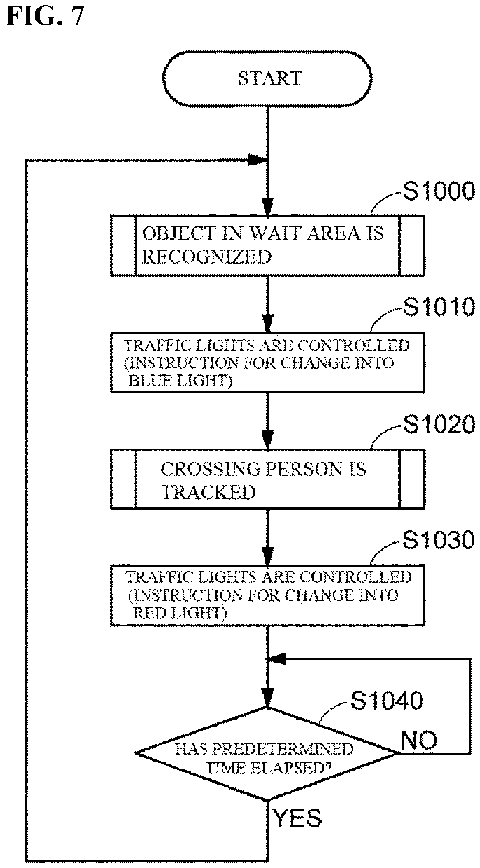

Referring to FIG. 7 to FIG. 9, the control structure of a computer program that is run by the detection system 50 in order to detect the person in the wait area or the pedestrian crossing and to assist in crossing the pedestrian crossing will be described. The program starts in response to, for example, an instruction to start from an administrator.

Referring to FIG. 7, the program includes a step S1000 at which the object in the wait area is recognized by the image sensor, a step S1010 at which the integrated processing unit transmits an instruction to change the traffic lights into the blue light to the traffic lights, which is performed after the step S1000, a step S1020 at which the integrated processing unit causes the millimeter-wave sensor to track the crossing person who crosses the pedestrian crossing, which is performed after the step S1010, a step S1030 at which the integrated processing unit transmits an instruction to change the traffic lights into the red light to the traffic lights, which is performed after the step S1020, and a step S1040 at which control is waited until a predetermined time has elapsed, which is performed after the step S1030. At the step S1040, the control is returned to the step S1000 after the predetermined time has elapsed.

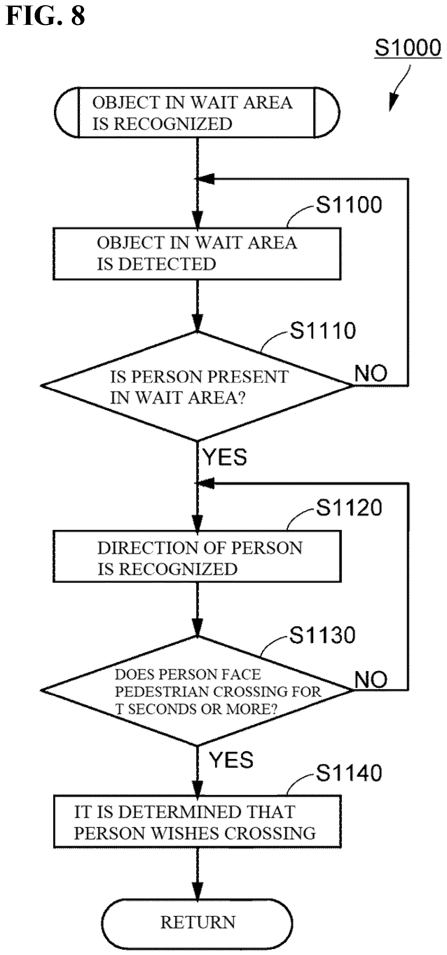

FIG. 8 illustrates the detailed flow of the step S1000 in FIG. 7. Referring to FIG. 8, this routine includes a step S1100 at which the sensor data of the image sensor is processed, and consequently, the object in the wait area is detected and a step S1110 at which whether the person is present in the wait area is determined, and the flow of the control is branched depending on the result of determination, which is performed after the step S1100. In the case where it is determined that no one is present in the wait area at the step S1110, the control is returned to the step S1100.

The routine also includes a step S1120 at which the sensor data of the image sensor is processed (image processing), and consequently, the direction of the detected person is recognized, which is performed in the case where it is determined that the person is present in the wait area at the step S1110, and a step S1130 at which whether the detected person faces the pedestrian crossing for t seconds or more is determined, and the flow of the control is branched depending on the result of determination, which is performed after the step S1120. At the step S1130, whether the detected person faces the pedestrian crossing for, for example, 5 seconds to 15 seconds or more is determined. In the case where it is determined that the detected person does not face the pedestrian crossing for t seconds or more at the step S1130, the control is returned to the step S1120.

The routine also includes a step S1140 at which it is determined that the person wishes crossing, and the routine ends, which is performed in the case where it is determined that the detected person faces the pedestrian crossing for t seconds or more at the step S1130.

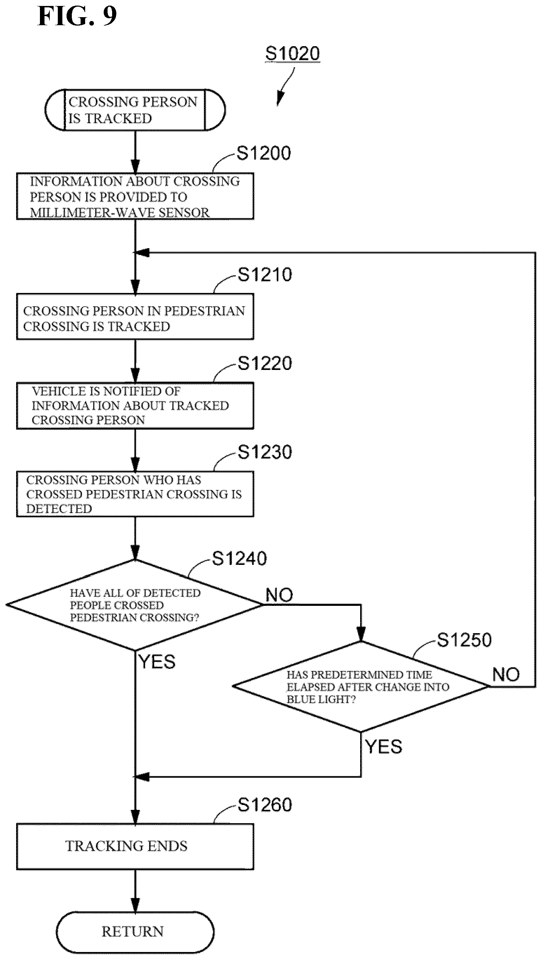

FIG. 9 illustrates the detailed flow of the step S1020 in FIG. 7. Referring to FIG. 9, this routine includes a step S1200 at which the image sensor provides (transmits) information (information about the crossing person) about the person detected in the wait area to the millimeter-wave sensor, a step S1210 at which the millimeter-wave sensor is controlled, and the crossing person in the pedestrian crossing is tracked, which is performed after the step S1200, and a step S1220 at which a vehicle that is to enter the pedestrian crossing is notified of the information about the crossing person that is tracked.

The routine also includes a step S1230 at which the image sensor detects the crossing person who has crossed the pedestrian crossing, which is performed after the step S1220, and a step S1240 at which whether all of detected people have crossed the pedestrian crossing is determined, and the flow of the control is branched depending on the result of determination, which is performed after the step S1230. The routine also includes a step S1250 at which whether a predetermined time has elapsed after the lights are changed into the blue light is determined, and the flow of the control is branched depending on the result of determination, which is performed in the case where it is determined that not all of the detected people have crossed the pedestrian crossing at the step S1240. In the case where it is determined that the predetermined time has not elapsed after the lights are changed into the blue light at the step S1250, the control is returned to the step S1210.

The routine also includes a step S1260 at which the millimeter-wave sensor ends tracking the crossing person, and the routine ends, which is performed in the case where it is determined that all of the detected people have crossed the pedestrian crossing at the step S1240, or in the case where it is determined that the predetermined time has elapsed after the lights are changed into the blue light at the step S1250.

### [Operation]

The detection system 50 according to the present embodiment operates as follows.

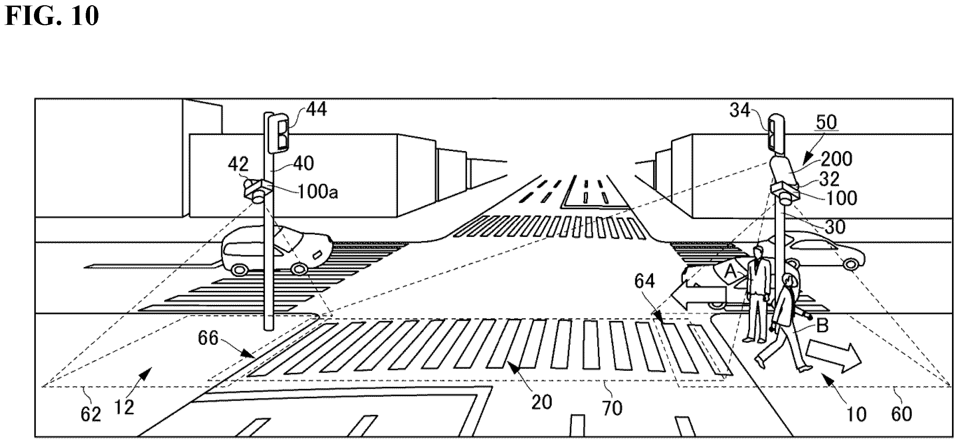

Referring to FIG. 10, the image sensor 100 of the detection system 50 recognizes objects in the wait area 10. A person A and a person B are present in the wait area 10. The image sensor 100 detects the person A and the person B present in the wait area 10 (YES at the step S1100 and the step S1110 in FIG. 8), a label (an object ID) is attached to each detected person. The image sensor 100 recognizes the direction of each detected person (the step S1120) and determines whether the person faces the pedestrian crossing 20 for t seconds or more, based on the result of recognition. The person B does not face the pedestrian crossing 20, and the person A faces the pedestrian crossing 20. If the person A continues this state for t seconds, the image sensor 100 determines that the person faces the pedestrian crossing 20 for t seconds or more (YES at the step S1130) and determines that the person wishes crossing (the step S1140).

The integrated processing unit 300 transmits an instruction to change the lights into the blue light to the traffic light 34 and the traffic light 44 depending on determination that the person wishes crossing made by the image sensor 100 (the step S1010 in FIG. 7). When the traffic light 34 and the traffic light 44 are changed into the blue light, the person A starts crossing the pedestrian crossing 20.

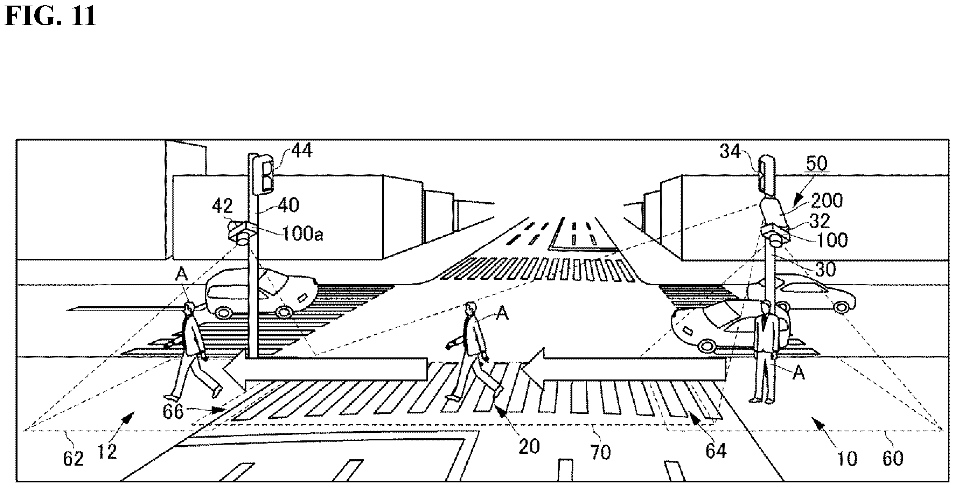

Referring to FIG. 11, the image sensor 100 transmits information about the pedestrian who enters the pedestrian crossing 20 (the information about the crossing person such as the label that is attached to the detected object, an entry point into the pedestrian crossing, and a direction) to the millimeter-wave sensor 200. Specifically, the integrated processing unit 300 (see FIG. 5) integrates the sensor data from the image sensor 100 and the sensor data from the millimeter-wave sensor 200 in the overlap area 64 and consequently gives the information about the pedestrian who enters the pedestrian crossing 20 (here, information about the person A) to the millimeter-wave sensor 200 (the step S1200 in FIG. 9).

The millimeter-wave sensor 200 recognizes the person A who enters the pedestrian crossing 20, based on the information about the crossing person from the image sensor 100 and starts tracking the crossing person (the person A) (the step S1210). The integrated processing unit 300 notifies vehicles that try to enter the pedestrian crossing 20 of the crossing person who crosses the pedestrian crossing 20 (the step S1220). The image sensor 100a at the exit of the pedestrian crossing 20 detects an object in the wait area 12. The image sensor 100a at the exit receives the information about the pedestrian who exits from the pedestrian crossing 20 (the information about the crossing person such as the label that is attached to the detected object, the entry point into the pedestrian crossing, and the direction) from the millimeter-wave sensor 200. Specifically, the integrated processing unit 300 integrates the sensor data from the image sensor 100a and the sensor data from the millimeter-wave sensor 200 in the overlap area 64 and consequently gives the information about the pedestrian who exits from the pedestrian crossing 20 (here, the information about the person A) to the image sensor 100a.

The image sensor 100a at the exit recognizes the crossing person who has crossed the pedestrian crossing 20 and transmits information about this to the integrated processing unit 300. The integrated processing unit 300 detects the crossing person who has crossed the pedestrian crossing 20, based on the information from the image sensor 100a at the exit (the step S1230) and determines whether all of the detected people have crossed the pedestrian crossing 20. In an example illustrated in FIG. 11, the crossing person who crosses the pedestrian crossing 20 is only the person A. Accordingly, if the person A has crossed the pedestrian crossing 20, the integrated processing unit 300 determines that all of the detected people have crossed the pedestrian crossing 20 (YES at the step S1240). The millimeter-wave sensor 200 ends tracking (the step S1260), and the integrated processing unit 300 transmits an instruction to change the lights into the red light to the traffic light 34 and the traffic light 44 (the step S1030 in FIG. 7).

In the case where the number of people who cross the pedestrian crossing 20 is large, the state of the blue light is maintained for a long time if it is waited that all of the detected people have crossed the pedestrian crossing 20. For this reason, when an elapsed time after the instruction to change the lights into the blue light is transmitted to the traffic light 34 and the traffic light 44 becomes a predetermined time or more, the integrated processing unit 300 transmits the instruction to change the lights into the red light to the traffic light 34 and the traffic light 44 regardless of whether all of the detected people have crossed the pedestrian crossing 20 (the step S1030 in FIG. 7).

The detection system 50 waits for a predetermined time in the state of the red light and repeats the operation described above after the predetermined time has elapsed (YES at the step S1040).

**In** the case where the crossing direction of the crossing person is opposite, the roles of the image sensor 100 and the image sensor 100a are reversed. The other operation is the same.

### [Effects of Present Embodiment]

The detection system 50 according to the present embodiment exerts effects described below as clear from the above description.

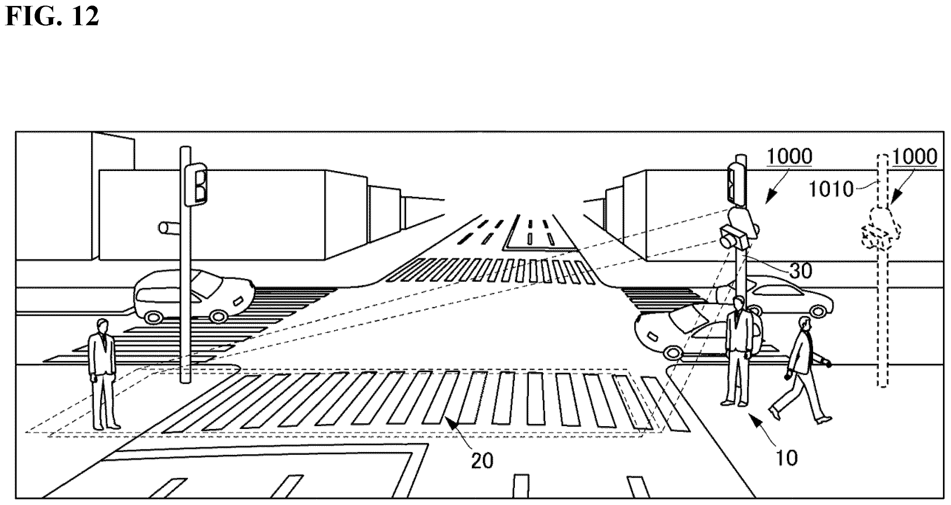

Referring to FIG. 12, a composite sensor 1000 that includes an image sensor and a millimeter-wave sensor integrates sensor data from the image sensor and sensor data from the millimeter-wave sensor and consequently increases the precision of detection when an object on a road is detected. For this reason, the image sensor and the millimeter-wave sensor have the same detection target area. It is difficult for the image sensor and the millimeter-wave sensor to have a viewing angle that widely extends in the vertical direction, and accordingly, the composite sensor 1000 is installed so as to obliquely look down on the pedestrian crossing 20. In the case where the composite sensor 1000 is installed on the traffic light pole 30 near the wait area 10 in this manner, it is difficult to detect an object in the wait area 10. For this reason, it is necessary to provide a new support member 1010 such as a pole at a position away backward from the wait area 10 and to install the composite sensor 1000 at the position. In this case, construction costs are additionally needed to provide the new support member 1010, and the burden of costs increases.

Referring to FIG. 4, the detection system 50 according to the present embodiment has an increased degree of freedom of installation of the sensors and is capable of detecting the wider area because the image sensor 100 and the millimeter-wave sensor 200 have the different detection target areas. Specifically, the image sensor 100 has the detection target area 60 that contains the wait area 10 adjacent to the pedestrian crossing 20. The millimeter-wave sensor 200 has the detection target area 70 that is at least the portion of the pedestrian crossing 20. This enables the image sensor 100 to be installed near the detection target area 60 and enables the millimeter-wave sensor 200 to be installed near the image sensor 100. The degree of freedom of installation of the sensors can be increased, and accordingly, the traffic light pole 30, which is an existing support member, can be used to install the sensors. Accordingly, the burden of costs due to a new support member can be inhibited from increasing.

In the state in which the sensors are installed on the traffic light pole 30, the image sensor 100 covers the wait area 10 adjacent to the pedestrian crossing 20 as the detection target area 60, and the detection target area 70 of the millimeter-wave sensor 200 covers the pedestrian crossing 20. The image sensor 100 and the millimeter-wave sensor 200 have the different detection target areas, and consequently, the objects in the wider area can be detected. The image sensor 100 is used to detect the object in the wait area 10, the millimeter-wave sensor 200 that has the detection characteristics different from those of the image sensor 100 is used to detect the object in the pedestrian crossing 20, and consequently, the sensors that are suitable to detect the objects in the areas can be used. This enables the precision of detection of the objects to be inhibited from being reduced.

As for the detection system 50, at least the portion of the detection target area 60 of the image sensor 100 overlaps the detection target area 70 of the millimeter-wave sensor 200 in the pedestrian crossing 20, and at least the portion of the detection target area 70 of the millimeter-wave sensor 200 overlaps the detection target area 60 of the image sensor 100 in the wait area 10. This enables information about the object that is detected by the image sensor 100 to be easily provided to the millimeter-wave sensor 200. The millimeter-wave sensor 200 is capable of recognizing the object that moves from the wait area 10 to the pedestrian crossing 20 by receiving the information about the object from the image sensor 100 and is accordingly capable of tracking the object in the pedestrian crossing 20. The structure described above enables the information about the object that is detected by the millimeter-wave sensor 200 to be easily provided to the image sensor 100.

The overlap area 64 in which the detection target area 60 of the image sensor 100 and the detection target area 70 of the millimeter-wave sensor 200 overlap is smaller than the detection target area 60 of the image sensor 100 except for the overlap area 64 and the detection target area 70 of the millimeter-wave sensor 200 except for the overlap area 64, and consequently, the areas in which the objects are detected can be easily enlarged.

The image sensor 100 is installed so as to face downward in order to detect the object in the wait area 10, and accordingly, the image sensor 100 can focus on detection and recognition in an area near the position right below. This enables the image sensor 100 to be a camera that has low sensitivity. In addition, the image sensor 100 can inhibit a lens from becoming dirty because the lens is install so as to face downward. The lens of the image sensor 100 faces downward, and consequently, the lens is easy to clean by using, for example, a mop having a long handle.

The image sensor 100a that is provided in the wait area 12 has the same effects.

### (First Modification)

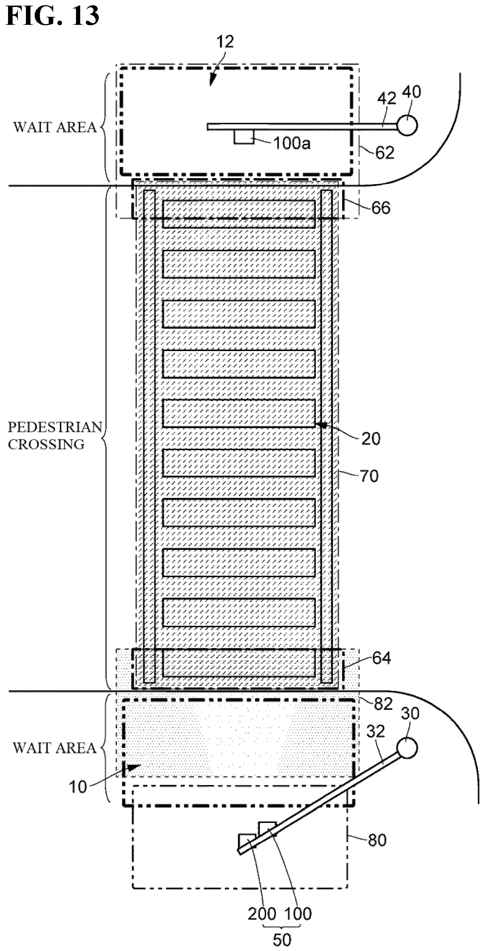

Referring to FIG. 13, there is a possibility that the wait area 10 is not located right below the image sensor 100 depending on, for example, the position of the traffic light pole 30 or situations at a position near the pedestrian crossing 20. According to a first modification, the image sensor 100 is installed such that an area 80 that corresponds to the area right below the image sensor 100 contains at least a portion of the wait area 10. That is, the image sensor 100 has a detection target area 82 that contains at least a portion of the wait area 10 with respect to the wait area 10 that contains at least a portion of the area 80 that corresponds to the area right below the image sensor 100. An example of the area 80 that corresponds to the area right below the image sensor 100 is an area that can be detected by the image sensor 100 in the case where the image sensor 100 faces downward in the vertical direction. The detection target area 82 can be set so as to contain at least a portion of the wait area 10.

### (Second Modification)

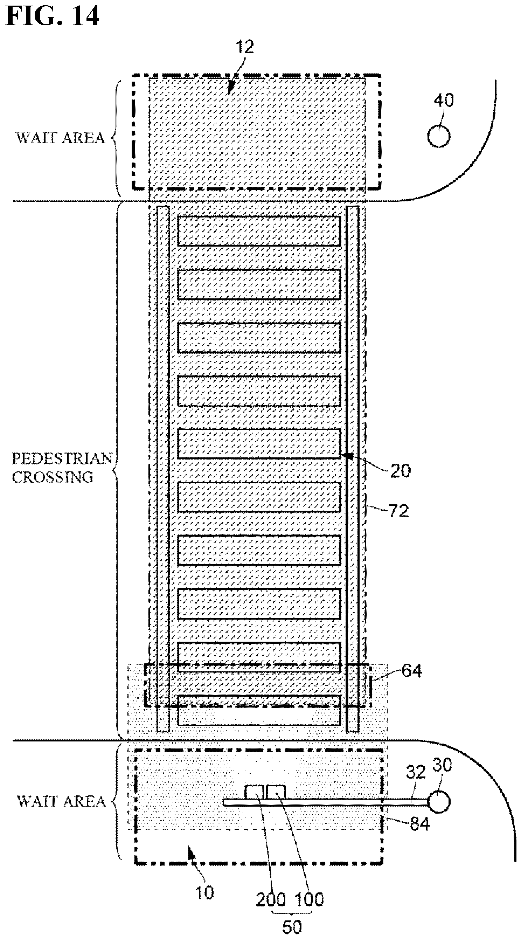

Referring to FIG. 14, a detection system according to a second modification differs from that according to the embodiment described above in that a detection target area 72 of the millimeter-wave sensor 200 is enlarged. Specifically, the detection target area 72 of the millimeter-wave sensor 200 contains at least a portion of the wait area 12 in addition to the pedestrian crossing 20. That is, the millimeter-wave sensor 200 detects the object in the wait area 12 in addition to the object in the pedestrian crossing 20. This enables the image sensor that detects the object in the wait area 12 to be omitted. In an example illustrated in FIG. 14, a detection target area 84 of the image sensor 100 is set so as to contain a portion of the wait area 10.

### (Second Embodiment)

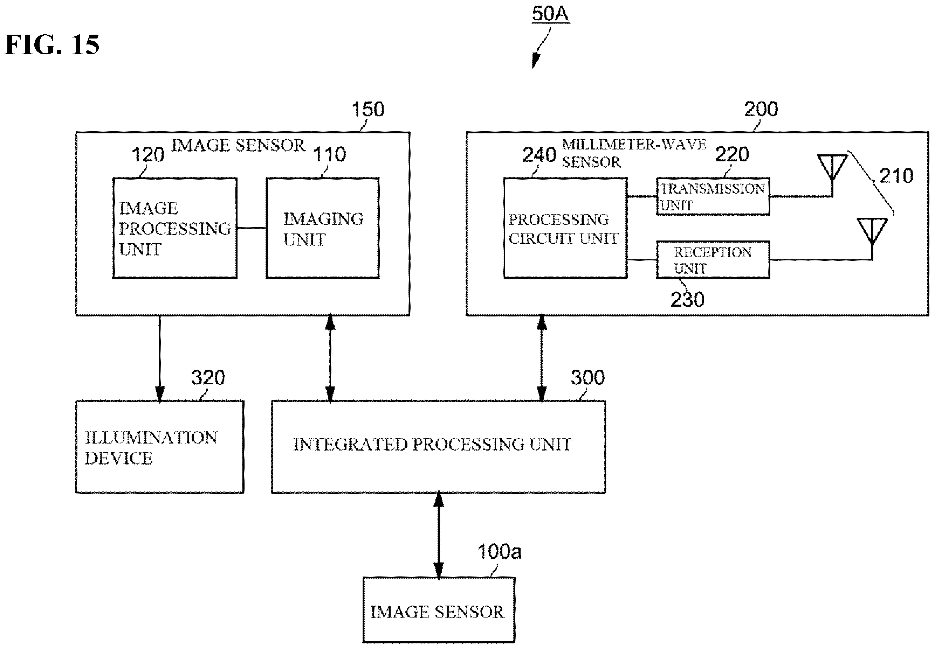

Referring to FIG. 15, a detection system 50A according to the present embodiment differs from that according to the first embodiment in that an illumination device 320 that illuminates a wait area is included, and an image sensor 150 is included instead of the image sensor 100 (see FIG. 5). The other structure is the same as that according to the first embodiment.

The illumination device 320 includes a white LED (Light Emitting Diode) that emits visible light. The image sensor 150 also functions as an illuminance sensor. The image sensor 150 detects the object in the wait area 10 and measures the illuminance of the wait area 10, based on imaged image data. The image sensor 150 outputs an ON signal to the illumination device 320 when the illuminance of the wait area 10 is a reference value or less and outputs an OFF signal to the illumination device 320 when the illuminance of the wait area 10 exceeds the reference value. For example, the reference value can correspond to illuminance with which the performance of detection of the image sensor 150 is reduced due to the lock of the amount of light.

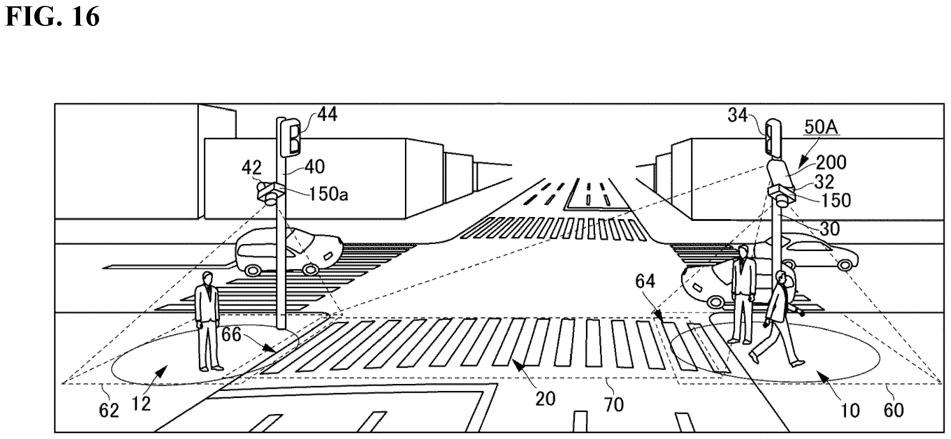

Referring to FIG. 16, an image sensor 150a may be installed on the traffic light pole 40 that is provided on the wait area 12, and an illumination device that illuminates the wait area 12 may be provided near the image sensor 150a. In this case, the image sensor 150a measures the illuminance of the wait area 12. The image sensor 150a outputs the ON signal to the illumination device when the illuminance of the wait area 12 is a reference value or less and outputs the OFF signal to the illumination device when the illuminance of the wait area 12 exceeds the reference value as in the image sensor 150.

The other structure according to the second embodiment is the same as that according to the first embodiment.

### [Software Structure]

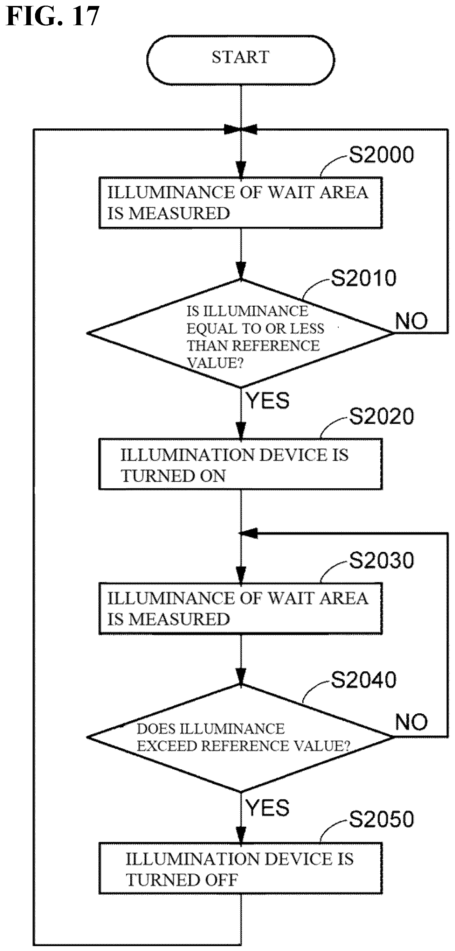

Referring to FIG. 17, the control structure of a computer program that is run by the image sensor in order to control the illumination device that illuminates the wait area will be described. The program starts in response to turning on the image sensor.

The program includes a step S2000 at which the illuminance of the wait area is measured, a step S2010 at which whether the illuminance of the wait area is the reference value or less is determined, and the flow of the control is branched depending on the result of determination, which is performed after the step S2000. In the case where it is determined that the illuminance of the wait area is not the reference value or less at the step S2010, the control is returned to the step S2000.

The program also includes a step S2020 at which the illumination device 320 (see FIG. 15) is turned on, which is performed in the case where it is determined that the illuminance of the wait area is the reference value or less at the step S2010, a step S2030 at which the illuminance of the wait area is measured, which is performed after the step S2020, and a step S2040 at which whether the illuminance of the wait area exceeds the reference value is determined, and the flow of the control is branched depending on the result of determination, which is performed after the step S2030. In the case where it is determined that the illuminance of the wait area does not exceed the reference value at the step S2040, the control is returned to the step S2030.

The program also includes a step S2050 at which the illumination device 320 is turned off, and the control is returned to the step S2000, which is performed in the case where it is determined that the illuminance of the wait area exceeds the reference value at the step S2040.

### [Operation]

The detection system 50A according to the present embodiment operates as follows. The operation other than the operation of controlling the illumination device 320 is the same as that according to the first embodiment.

Referring to FIG. 16, the image sensor 150 measures the illuminance of the wait area 10, based on the image information of the wait area 10. When the illuminance of the wait area 10 is reduced to the reference value or less (YES at the step S2010 in FIG. 17), for example, at night, the image sensor 150 outputs the ON signal to the illumination device 320 (see FIG. 15) (the step S2020). The illumination device 320 supplies power to the white LED in response to the ON signal from the image sensor 150 and illuminates the wait area 10.

The image sensor 150 measures the illuminance of the wait area 10 (the step S2030) and outputs the OFF signal to the illumination device 320 (the step S2050) when the illuminance of the wait area 10 exceeds the reference value (YES at the step S2040). The illumination device 320 stops the supply of the power to the white LED in response to the OFF signal from the image sensor 150 and ends emitting the visible light toward the wait area 10.

The image sensor 150a that is provided above the wait area 12 similarly measures the illuminance of the wait area 12 and outputs the ON signal to the illumination device when the illuminance of the wait area 12 is the reference value or less. The illumination device supplies the power to the white LED in response to the ON signal from the image sensor 150a and illuminates the wait area 12. The image sensor 150a outputs the OFF signal to the illumination device when the illuminance of the wait area 12 exceeds the reference value. The illumination device stops the supply of the power to the white LED in response to the OFF signal from the image sensor 150a and ends emitting the visible light toward the wait area 12.

### [Effects]

The detection system 50A according to the present embodiment includes the illumination device 320 that illuminates the wait area and can consequently inhibit the precision of recognition of the image sensor 150 from being reduced due to reduced illuminance. The image sensor 150a has the same effect.

The other effects according to the second embodiment are the same as those according to the first embodiment.

In an example described according to the second embodiment, the image sensor has the function of the illuminance sensor, but the present disclosure is not limited to the embodiment. For example, an illuminance sensor may be additionally provided. The illumination device may include the illuminance sensor and may consequently be autonomously turned on and off depending on the illuminance of the wait area. The illumination device may be separated from the image sensor or may be integrally formed with the image sensor.

### (Third Embodiment)

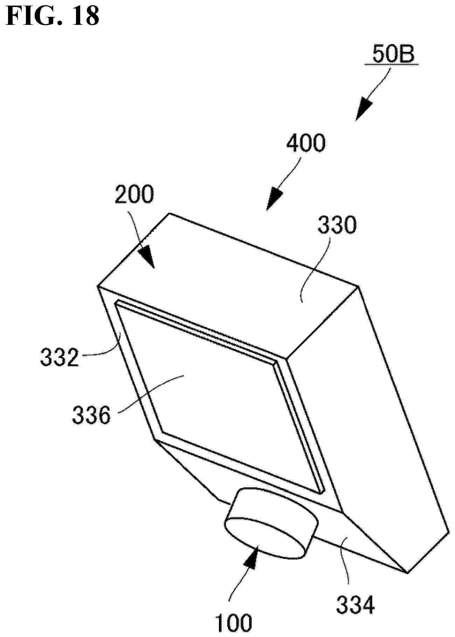

Referring to FIG. 18, a detection system 50B according to the present embodiment differs from those according to the first and second embodiments in that a housing 330 unitizes the image sensor 100 and the millimeter-wave sensor 200. That is, as for the detection system 50B according to the present embodiment, the single housing 330 includes the image sensor 100 and the millimeter-wave sensor 200, and consequently, these sensors are unitized.

The housing 330 unitizes the image sensor 100 and the millimeter-wave sensor 200, and consequently, a detection device 400 is formed. That is, the detection system 50B includes the detection device 400 where the housing 330 unitizes the image sensor 100 and the millimeter-wave sensor 200. A front surface of the housing 330 includes a first surface 332 and a second surface 334 that is located below the first surface 332. The millimeter-wave sensor 200 is provided at a position that faces the first surface 332 in the housing 330. The image sensor 100 is provided on the second surface 334 of the housing 330. Specifically, a radome 336 that is a cover for protecting the antenna 210 (see FIG. 15) of the millimeter-wave sensor 200 is provided on the first surface 332 of the housing 330. The millimeter-wave sensor 200 is provided at the position that faces the first surface 332 in the housing 330. The antenna 210 faces the radome 336 in the housing 330. That is, the antenna 210 is provided in parallel with the first surface 332. However, the antenna 210 may be provided so as to be slightly incline with respect to the first surface 332. The image sensor 100 is mounted on the second surface 334 of the housing 330.

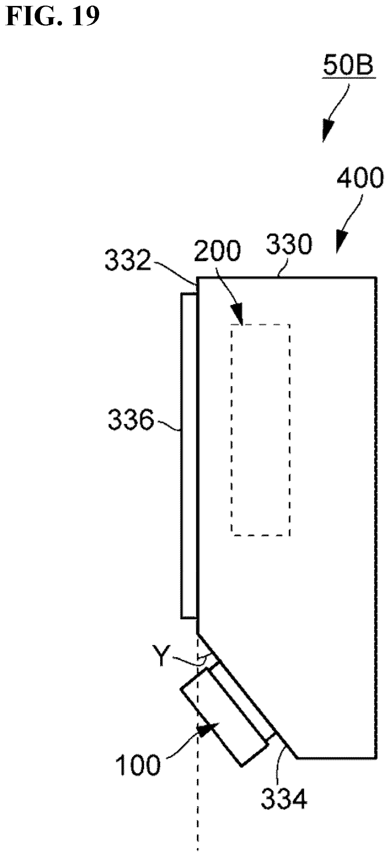

Referring to FIG. 19, the second surface 334 of the housing 330 intersects with the first surface 332 at a predetermined angle Y. The predetermined angle Y is set such that the detection target area of the image sensor 100 contains at least a portion of the wait area when the housing 330 is installed on a support member (such as a traffic light pole) on a roadside such that the detection target area of the millimeter-wave sensor 200 corresponds to the pedestrian crossing.

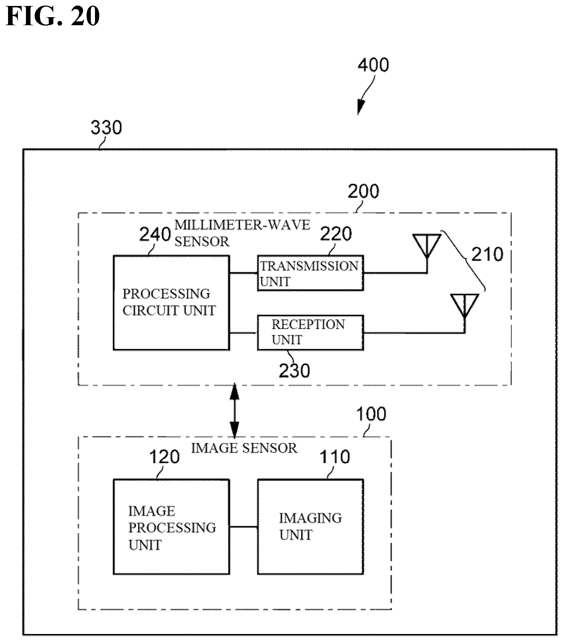

Referring to FIG. 20, the detection device 400 includes the housing 330 that includes the image sensor 100 and the millimeter-wave sensor 200. The integrated processing unit is separated from the detection device 400, and the detection device 400 performs a predetermined process by communicating with the integrated processing unit.

The housing 330 thus unitizes the image sensor 100 and the millimeter-wave sensor 200, and consequently, the multiple sensors can be easily installed. The millimeter-wave sensor 200 is provided at the position that faces the first surface 332 in the housing 330, the image sensor 100 is provided on the second surface 334 that intersects with the first surface 332 at the predetermined angle Y, and consequently, the image sensor 100 and the millimeter-wave sensor 200 can be easily installed.

The image sensor 100 and the millimeter-wave sensor 200 are unitized, and consequently, the time is easily synchronized between the image sensor 100 and the millimeter-wave sensor 200, and information such as the information about the crossing person can be easily shared.

The other structure and effects are the same as those according to the first or second embodiment described above.

### (Third Modification)

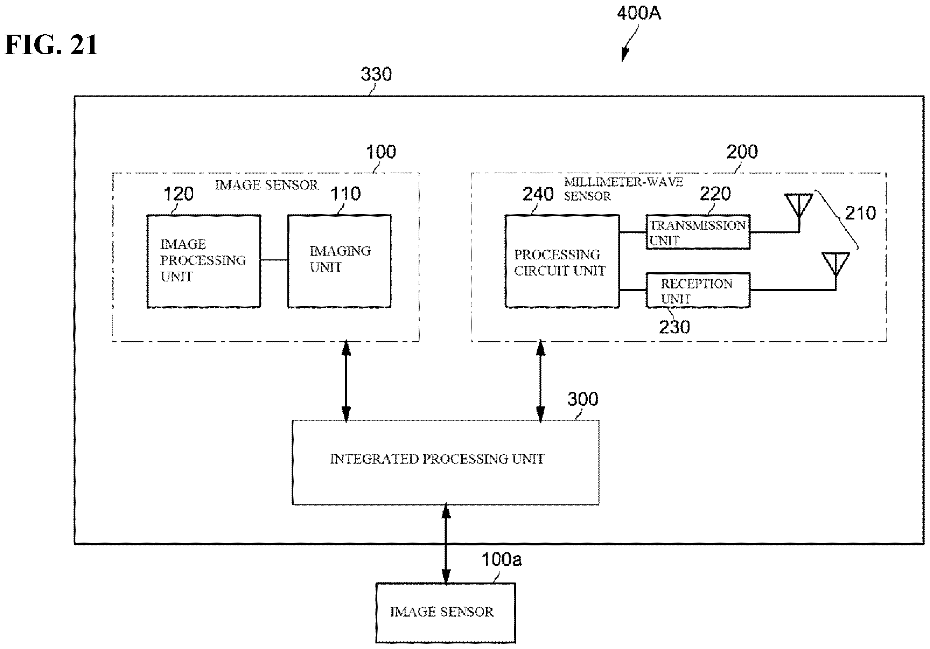

Referring to FIG. 21, a detection device 400A according to a third modification differs from that according to the third embodiment in further including the integrated processing unit 300.

### (Fourth Modification)

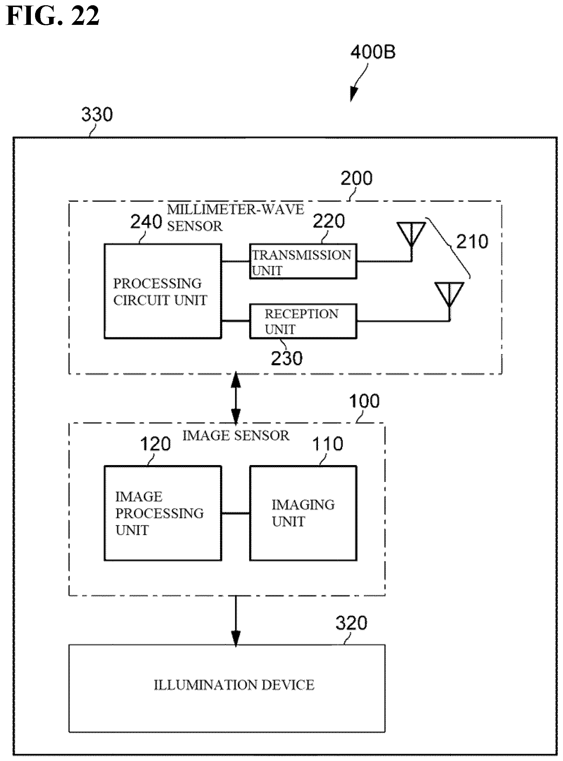

Referring to FIG. 22, a detection device 400B according to a fourth modification differs from that according to the third embodiment in further including the illumination device 320 that illuminates the wait area. The detection device 400B may further include the integrated processing unit as in the third modification.

### (Fourth Embodiment)

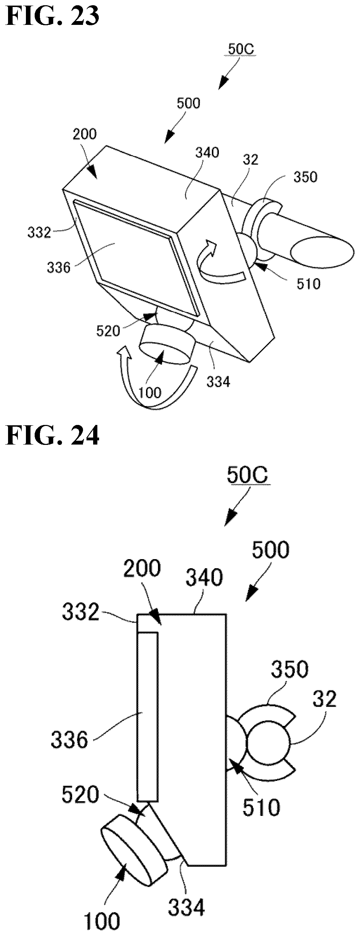

Referring to FIG. 23 and FIG. 24, a detection system 50C according to the present embodiment differs from that according to the third embodiment in that the imaging direction of the image sensor and the installation angle of the housing are adjustable. The other structure is the same as that according to the third embodiment.

The detection system 50C includes a detection device 500. The detection device 500 includes the image sensor 100, the millimeter-wave sensor 200, and a housing 340 that accommodates these. The housing 340 has the same shape as the housing 330 (see FIG. 18 and FIG. 19) according to the third embodiment. A front surface of the housing 340 includes the first surface 332 and the second surface 334 that is located below the first surface 332. The millimeter-wave sensor 200 is provided at a position that faces the first surface 332 in the housing 340. An imaging direction adjustment device 520 for adjusting the imaging direction of the image sensor 100 is provided on the second surface 334 of the housing 340, and the image sensor 100 is connected to the imaging direction adjustment device 520. The second surface 334 of the housing 340 intersects with the first surface 332 at the predetermined angle Y (see FIG. 19).

The detection device 500 also includes an installation angle adjustment device 510 for adjusting the installation angle of the housing 340. A fixture 350 fixes the housing 340 to the arm member 32. The installation angle adjustment device 510 is provided between a back surface of the housing 340 and the fixture 350.

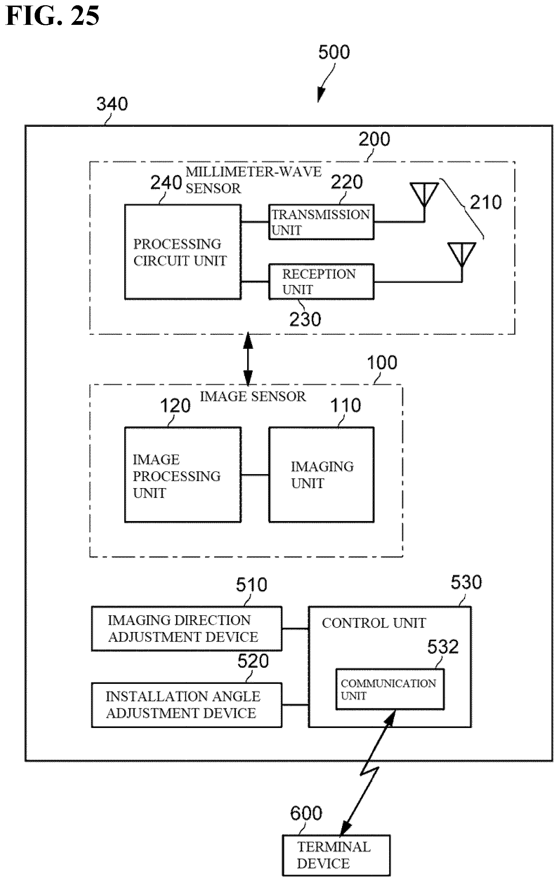

Referring to FIG. 25, the detection device 500 also includes a control unit 530 that controls the imaging direction adjustment device 520 and the installation angle adjustment device 510. The control unit 530 includes a communication unit 532 that communicates with a terminal device 600 with a wired cable or wirelessly (here, wirelessly). The control unit 530 causes the imaging direction adjustment device 520 and the installation angle adjustment device 510 to be driven in response to a control instruction from the terminal device 600. The detection device 500 may include the integrated processing unit as described according to the third modification. The detection device 500 may also include the illumination device that illuminates the wait area as described according to the fourth modification.

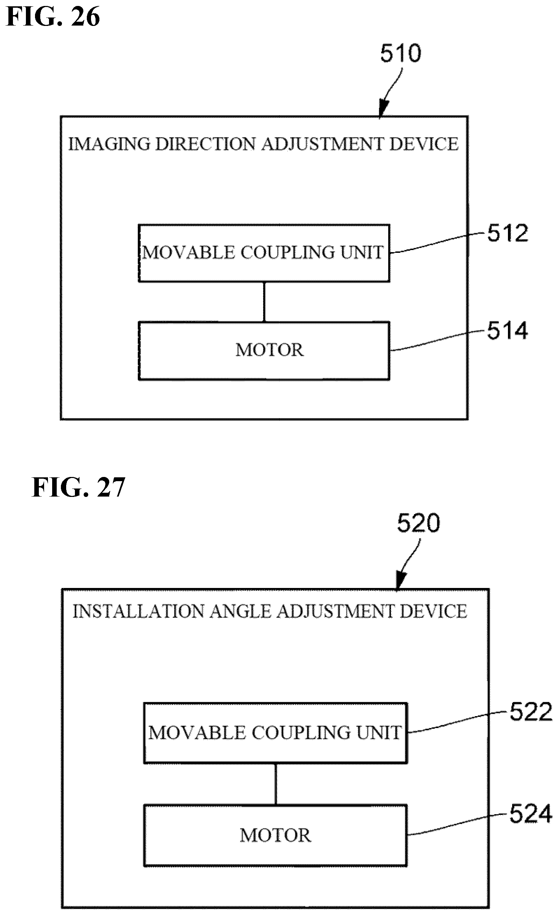

Referring to FIG. 26, the imaging direction adjustment device 520 includes a movable coupling unit 512 for mounting the image sensor 100 to the housing 340 and a motor 514 for driving the movable coupling unit 512. For example, the motor 514 is a stepper motor and drives the movable coupling unit 512 depending on an instruction from the control unit 530 (see FIG. 25). The motor 514 drives the movable coupling unit 512, and consequently, the imaging direction of the image sensor 100 is changed.

Referring to FIG. 27, the installation angle adjustment device 510 includes a movable coupling unit 522 that is provided between the housing 340 and the fixture 350 (see FIG. 23 and FIG. 24) and a motor 524 for driving the movable coupling unit 522. For example, the motor 524 is a stepper motor and drives the movable coupling unit 522 in response to an instruction from the control unit 530 (see FIG. 25). The motor 524 drives the movable coupling unit 522, and consequently, the installation angle of the housing 340 is changed.

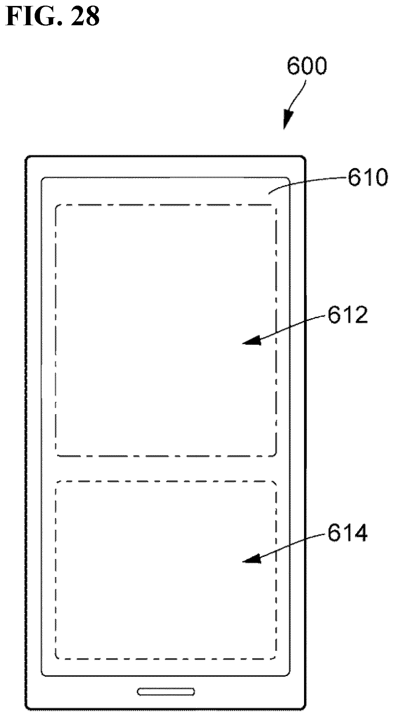

Referring to FIG. 28, an example of the terminal device 600 is a smartphone. The terminal device 600 includes a touch screen display 610 that displays information and that receives the input of a user touch operation. The terminal device 600 is capable of adjusting the installation angle of the housing 340 and the imaging direction of the image sensor 100. The touch screen display 610 has an image display region 612 in which an image imaged by the image sensor 100 is displayed and an operation region 614 in which an operation of changing the installation angle of the housing 340 and the imaging direction of the image sensor 100 is received.

The detection device 500 may also include a device that measures the direction of the image sensor 100 and the direction of the housing such as a gyro-sensor. **In** this case, the detection device 500 may transmit the direction of the image sensor 100 and the direction of the housing 340 that are measured by the device to the terminal device 600 via the control unit 530. This enables the user of the terminal device 600 to know the direction of the image sensor 100 and the direction of the housing 340 by using the terminal device 600.

### [Method of Installing and Adjusting Detection Device 500]

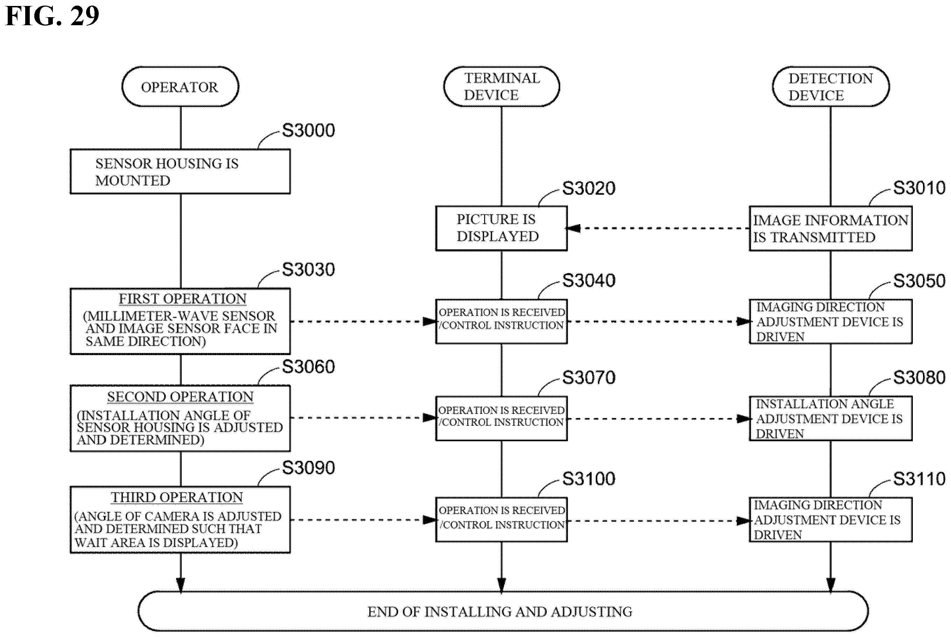

FIG. 29 is a sequence diagram illustrating a process of installing and adjusting the detection device 500 by an operator. Referring to FIG. 29, a method of installing and adjusting the detection device 500 will be described.

The operator mounts a sensor housing (the detection device 500) on the arm member 32 of the traffic light pole (a step S3000). The detection device 500 transmits a picture (image information) imaged by the image sensor 100 to the terminal device 600 (a step S3010). The terminal device 600 displays the picture imaged by the image sensor 100 in the image display region 612 (see FIG. 28) (a step S3020).

The operator operates the terminal device 600 such that the millimeter-wave sensor 200 and the image sensor 100 face in the same direction (a step S3030). The terminal device 600 receives the operation of the operator and transmits a control instruction depending on this to the detection device 500 (a step S3040). The detection device 500 drives the imaging direction adjustment device 520 depending on the control instruction from the terminal device 600 and adjusts the imaging direction of the image sensor 100 to the direction (the direction in which the radio wave is emitted) of the millimeter-wave sensor 200 (a step S3050).

The operator operates the terminal device 600 such that the installation angle of the housing 340 is adjusted while looking at the picture that is displayed in the image display region 612 of the terminal device 600 (a step S3060). The terminal device 600 receives the operation of the operator and transmits a control instruction depending on this to the detection device 500 (a step S3070). The detection device 500 drives the installation angle adjustment device 510 depending on the control instruction from the terminal device 600 (a step S3080) and changes the installation angle of the housing 340. Consequently, an area to which the radio wave is emitted from the millimeter-wave sensor 200 changes. A region that is imaged by the image sensor 100 substantially matches the area to which the radio wave is emitted from the millimeter-wave sensor 200. That is, the image display region 612 represents an area in which the millimeter-wave sensor 200 can detect an object. For example, the operator walks along an outer circumferential portion of the pedestrian crossing and adjusts the angle of the millimeter-wave sensor 200 while checking whether the operator is displayed in the image display region 612 of the terminal device 600. In the case where there are multiple operators, another operator may walk along the outer circumferential portion of the pedestrian crossing. This enables the operator to visually match the detection target area (the area to which the radio wave is emitted) of the millimeter-wave sensor 200 with the pedestrian crossing.

After the angle of the millimeter-wave sensor 200 is adjusted, the operator operates the terminal device 600 such that the imaging direction (the angle of the camera) of the image sensor 100 is adjusted, and the target wait area is displayed in the image display region 612 (a step S3090). The terminal device 600 receives the operation of the operator and transmits a control instruction depending on this to the detection device 500 (a step S3100). The detection device 500 drives the imaging direction adjustment device 520 in response to the control instruction from the terminal device 600 (a step S3110) and changes the imaging direction (the angle of the camera) of the image sensor 100. The operator determines that the position at which the target wait area is displayed in the image display region 612 is determined as the imaging direction of the image sensor 100. This is the end of the process of installing and adjusting the detection device 500.

The terminal device 600 is not limited to a smartphone but examples thereof may include a tablet terminal and a personal computer (a laptop PC).

### [Effects]

The structure described above enables the detection system 50C according to the present embodiment to remotely adjust the detection target areas of the image sensor 100 and the millimeter-wave sensor 200. The settings of the detection target areas can be adjusted on the ground. This enables the settings of the detection target areas to be easily adjusted. In addition, manual operations at high places can be reduced, and accordingly, this can be useful for the safety of the operator.

In addition, the installation angle of the housing 340 and the imaging direction of the image sensor 100 can be adjusted, and accordingly, the detection system 50C can be used for pedestrian crossings having various scales.

The other effects are the same as those according to the first to third embodiments.

### (Fifth Embodiment)

A detection system according to the present embodiment differs from those according to the embodiments described above in that a method of assisting crossing people who cross the pedestrian crossing with the safety is changed. The detection system according to the present embodiment differs from the embodiments described above also in that the image sensor and the millimeter-wave sensor are installed on the traffic light pole without the arm members. The other structure is the same as those according to the embodiments described above.

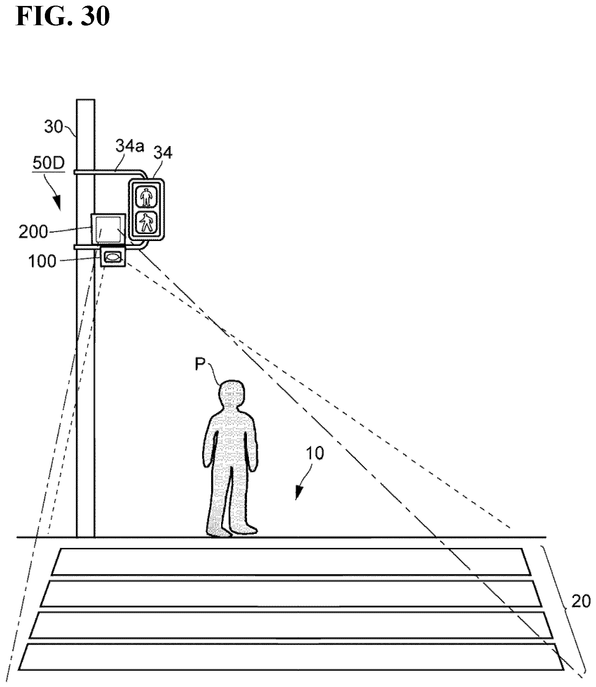

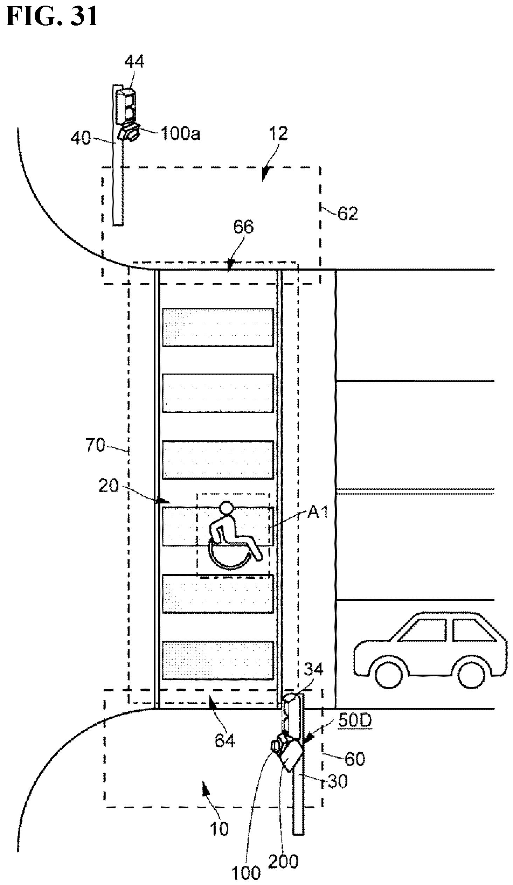

Referring to FIG. 1, in examples described according to the embodiments described above, the image sensor 100 and the millimeter-wave sensor 200 are installed on the traffic light pole 30 by using the arm member 32. The present disclosure, however, is not limited to the embodiments. The image sensor 100 and the millimeter-wave sensor 200 may be installed on the traffic light pole 30 without the arm member 32. Referring to FIG. 30, as for a detection system 50D, the image sensor 100 and the millimeter-wave sensor 200 are installed on, for example, a support arm 34a for supporting the traffic light 34. The image sensor 100a (see FIG. 4) may be installed on the traffic light pole as in the image sensor 100. Referring to FIG. 31, the detection system 50D performs a process of extending the time of the blue light depending on crossing situations of the crossing people who cross the pedestrian crossing 20. For example, the detection system 50D recognizes (identifies) a traffic restriction person A1 who waits in the wait area 10 and the wait area 12 by using the image sensor 100 and the image sensor 100a and tracks the traffic restriction person A1 by using the millimeter-wave sensor 200 when the traffic restriction person A1 starts crossing the pedestrian crossing 20. The traffic restriction person means a person who is restricted regarding a traffic action such as a person who needs, for example, assistance or a device or a person who is difficult to safely move. Specific examples include a person who needs a wheelchair and a visually impaired person who has a white cane. As for the recognition of the traffic restriction person, a wheelchair or a white cane, for example, may be recognized to recognize the traffic restriction person. The detection system 50D determines whether the traffic restriction person A1 can cross over the pedestrian crossing 20 during the blue light, based on information such as the remaining time of the blue light and the position and speed of the traffic restriction person A1. If the detection system 50D determines that the traffic restriction person A1 cannot cross over the pedestrian crossing 20 during the blue light, the detection system 50D transmits an instruction to extend the time of the blue light to the traffic light 34 and the traffic light 44.

The detection system 50D may calculate the time required for the traffic restriction person A1 to cross over the pedestrian crossing 20, based on information such as the position and speed of the traffic restriction person A1 and may transmit the instruction to extend the time of the blue light with a specified extra time to the traffic light 34 and the traffic light 44.

The target object to be recognized in the wait area 10 and the wait area 12 is not limited to the traffic restriction person but may be, for example, a person (a pedestrian) or a bicycle.

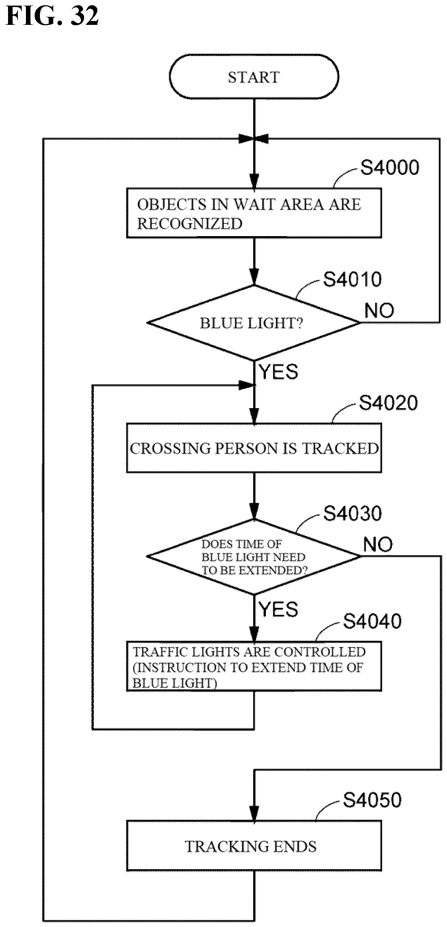

Referring to FIG. 32, the control structure of a computer program that is run by the detection system 50D will be described.

The program includes a step S4000 at which the image sensor 100 and the image sensor 100a recognize the objects in the wait area 10 and the wait area 12 and a step S4010 at which whether the traffic light 34 and the traffic light 44 are the blue light is determined through communication with the traffic light 34 and the traffic light 44, and the flow of the control is branched depending on the result of determination, which is performed after the step S4000. In the case where it is determined that these are not the blue light at the step S4010, the control is returned to the step S4000. At the step S4000, the objects (such as a person, a bicycle, and a traffic restriction person) present in the wait area 10 and the wait area 12 are recognized.

The program also includes a step S4020 at which the millimeter-wave sensor 200 tracks the crossing person, which is performed in the case where it is determined that the traffic light 34 and the traffic light 44 are the blue light at the step S4010. The program also includes a step S4030 at which whether the time of the blue light needs to be extended is determined, based on, for example, the remaining time of the blue light and the position and speed of the crossing person, and the flow of the control is branched depending on the result of determination, which is performed after the step S4020. The program also includes a step S4040 at which the instruction to extend the time of the blue light is transmitted to the traffic light 34 and the traffic light 44, and the control is returned to the step S4020, which is performed in the case where it is determined that the time of the blue light needs to be extended at the step S4030 and a step S4050 at which tracking the crossing person ends, and the control is returned to the step S4000, which is performed in the case where it is determined that the time of the blue light does not need to be extended at the step S4030.

The traffic light 34 and the traffic light 44 that receive the instruction for extension extend the time of the blue light by the predetermined time. **In** the case where the instruction for extension includes the specified extra time, the traffic light 34 and the traffic light 44 extend the time of the blue light by the specified time.

The detection system 50D has the structure described above and can consequently effectively assist the crossing people with the safety, particularly, traffic restriction people with the safety.

As for the assistance for the crossing people with the safety, assistance with safety other than the above description can be provided. For example, a vehicle that is to enter the pedestrian crossing may be notified of the type of each crossing person and the absence of the crossing person.

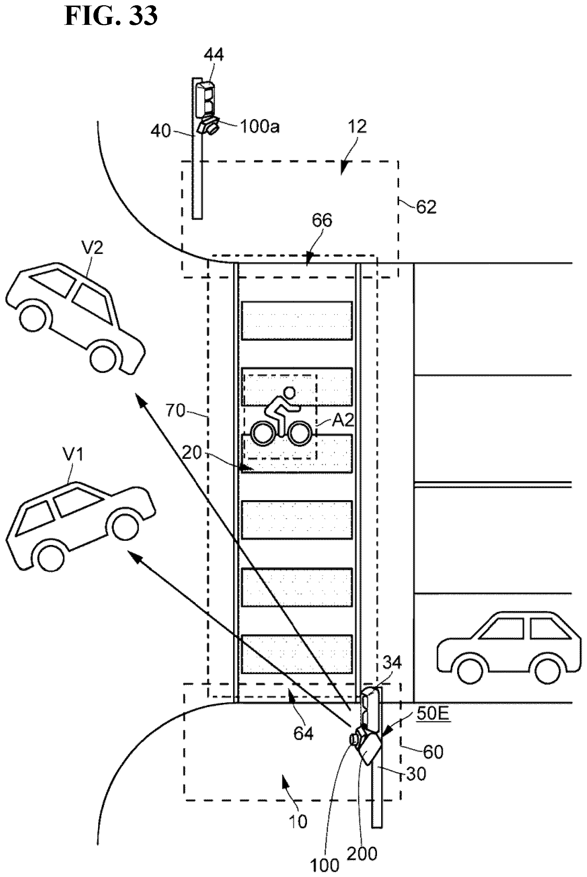

Referring to FIG. 33, such a detection system 50E will be described. As for the detection system 50E, the image sensor 100 and the image sensor 100a recognize the objects in the wait area 10 and the wait area 12. The recognition of each object includes the recognition of the type of the object (such as a pedestrian, a bicycle, or a traffic restriction person). The millimeter-wave sensor 200 tracks a crossing person A2 in the pedestrian crossing 20. Here, the crossing person A2 is riding a bicycle. The detection system 50E determines whether the crossing person A2 is in danger, based on tracking information (such as a type, a position, and a speed) about the crossing person A2 from the millimeter-wave sensor 200. For example, the detection system 50E determines whether the crossing person A2 is in danger, based on whether the current position of the crossing person A2 corresponds to a blind area for a right-turning vehicle V1 or a left-turning vehicle V2. The detection system 50E notifies the right and left-turning vehicles of the type (a bicycle) of the crossing person A2 and the presence of the crossing person A2.

In addition, the information that is detected by the image sensor and the millimeter-wave sensor may be stored in the storage device and may be used to grasp the situations of an accident as preparation in the case where the accident occurs in the pedestrian crossing.

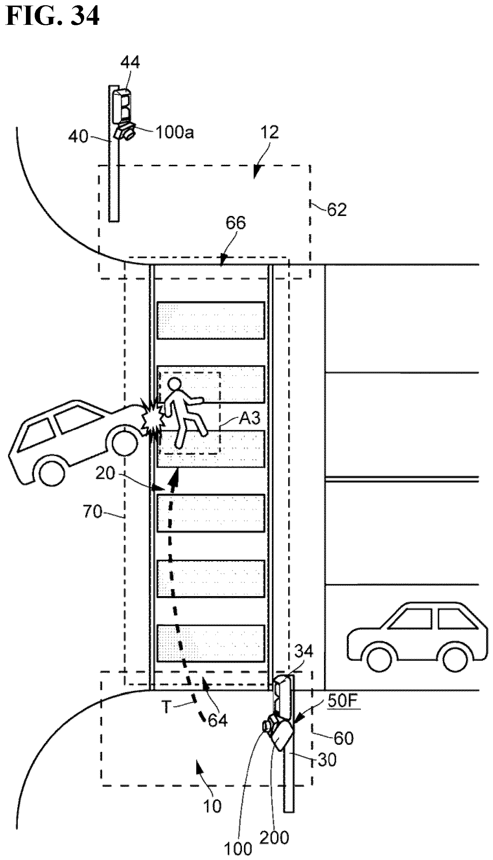

Referring to FIG. 34, such a detection system 50F will be described. As for the detection system 50F, the image sensor 100 and the image sensor 100a recognize the objects in the wait area 10 and the wait area 12. The recognition of each object includes the recognition of the type of the object (such as a pedestrian, a bicycle, or a traffic restriction person). The millimeter-wave sensor 200 tracks a crossing person A3 in the pedestrian crossing 20. The detection data (such as the result of recognition) of the image sensor 100 and the image sensor 100a and the detection data (such as the result of tracking) of the millimeter-wave sensor 200 are stored as history information in, for example, the memory of the integrated processing unit.

The detection system 50F receives the operation of the administrator when an accident occurs in the pedestrian crossing 20 and calculates the trajectory T of movement of a victim (the crossing person A2), based on the result of recognition of the image sensor 100 and the image sensor 100a and the result of tracking of the millimeter-wave sensor 200 that are stored as the history information. When the accident occurs, the trajectory T of movement of the victim can be used to grasp the situations of the accident.

In an example according to the embodiments described above, a combination of the image sensor and the millimeter-wave sensor is used, but the present disclosure is not limited to the embodiments. For example, a LiDAR (Light Detection and Ranging) may be used instead of the image sensor or in addition to the image sensor. The combination of the multiple sensors may be another one. In the case where the image sensor is used, a function of automatically detecting dirt on the lens from the result of detection of the image sensor (the camera) may be provided. In this case, the dirt on the lens is preferably automatically removed by using, for example, a wiper or an air duster.

In an example according to the embodiments described above, the detection device includes both of and the imaging direction adjustment device, but the present disclosure is not limited to the embodiments. The detection device may include either the installation angle adjustment device or the imaging direction adjustment device.

In an example according to the embodiments described above, the installation angle of the housing of the detection device and the imaging direction of the image sensor are remotely adjustable by using the installation angle adjustment device and the imaging direction adjustment device, but the present disclosure is not limited to the embodiments. For example, the installation angle adjustment device and the imaging direction adjustment device may be manually adjustable devices such as ball joints.

In an example according to the embodiments described above, the integrated processing unit is provided separately from the sensors (the image sensor and the millimeter-wave sensor), but the present disclosure is not limited to the embodiments. The integrated processing unit may be incorporated as the function of a sensor (such as the image sensor or the millimeter-wave sensor).

In an example according to the embodiments described above, the multiple sensors (the image sensor and the millimeter-wave sensor) are installed on the same support member, but the present disclosure is not limited to the embodiments. For example, the image sensor and the millimeter-wave sensor may be installed on different support members.

In an example according to the embodiments described above, the image sensor performs the process of recognizing the objects, but the present disclosure is not limited to the embodiments. For example, the process of recognizing the objects may be performed by a device other than the image sensor such as the integrated processing unit.

The processes (the functions) according to the embodiments described above may be performed by a processing circuit (Circuitry) that includes one or multiple processors. For example, the processing circuit described above may include an integrated circuit into which one or multiple memories, various analog circuits, and various digital circuits are combined in addition to the one or multiple processors described above. The one or multiple memories described above store a program (a command) that causes the processes described above to be performed by the one or multiple processors described above. The one or multiple processors described above may perform the processes described above in accordance with the program described above and read from the one or multiple memories described above or may perform the processes described above by using a logic circuit that is designed to perform the processes described above in advance. The processors described above may be various processors suitable to control a computer such as a CPU, a GPU (Graphics Processing Unit), a DSP (Digital Signal Processor), a FPGA (Field Programmable Gate Array), and an ASIC (Application Specific Integrated Circuit). The multiple processors described above and physically separated may perform the processes described above in corporation with each other. For example, the processors described above and included in multiple computers that are physically separated may perform the processes described above in corporation with each other via a network such as a LAN (Local Area Network), a WAN (Wide Area Network), or the internet.

An embodiment that is obtained by appropriately combining techniques disclosed according to the embodiments described above is included in the technical scope of the present disclosure.

The embodiments disclosed herein are just examples, and the present disclosure is not limited to only the embodiments described above. The scope of the present disclosure is shown by claims with reference to the detailed description of the invention and includes all modifications within equivalent meaning and range of words described herein.

### REFERENCE SIGNS LIST

10, 12 wait area
20 pedestrian crossing
30, 40 traffic light pole
32, 42 arm member
34, 44 traffic light
34a support arm
50, 50A, 50B, 50C, 50D, 50E, 50F detection system
60, 62, 70, 72, 82, 84 detection target area
64, 66 overlap area
80 area located right below
100, 100a, 150, 150a image sensor
110 imaging unit
120 image processing unit
200 millimeter-wave sensor
210 antenna
220 transmission unit
230 reception unit
240 processing circuit unit
300 integrated processing unit
302 calculation unit
304 memory
306, 532 communication unit
320 illumination device
330, 340 housing
332 first surface
334 second surface
336 radome
350 fixture
400, 400A, 400B, 500 detection device
510 installation angle adjustment device
512, 522 movable coupling unit
514, 524 motor
520 imaging direction adjustment device
530 control unit
600 terminal device
610 touch screen display
612 image display region
614 operation region
1000 composite sensor
1010 support member
A, B person
A1 traffic restriction person
A2, A3 crossing person
P waiting person
V1 right-turning vehicle
V2 left-turning vehicle
T trajectory

## Claims

1. A detection system comprising:
a first sensor installed above a first area adjacent to a pedestrian crossing, the first sensor having a first detection target area in which the first sensor detects an object, the first detection target area containing at least a portion of the first area; and
a second sensor installed above the first area, the second sensor having a detection characteristic different from that of the first sensor and having a second detection target area in which the second sensor detects an object, the second detection target area containing at least a portion of the pedestrian crossing.

2. The detection system according to claim 1, wherein at least a portion of the first detection target area overlaps the second detection target area in the first area or the pedestrian crossing.

3. The detection system according to claim 2, wherein an overlap area in which the first detection target area and the second detection target area overlap is smaller than the first detection target area except for the overlap area and the second detection target area except for the overlap area.

4. The detection system according to any one of claim 1 to claim 3, wherein the first sensor includes an image sensor configured to detect an object present in the first area, and
wherein the second sensor includes a millimeter-wave sensor configured to detect an object present in the pedestrian crossing.

5. The detection system according to claim 4, further comprising: a housing configured to unitize the first sensor and the second sensor.

6. The detection system according to claim 5, wherein the housing has a first surface and a second surface intersecting with the first surface,
wherein the first sensor is provided on the second surface of the housing, and
wherein the second sensor is provided at a position facing the first surface in the housing.

7. The detection system according to claim 6, wherein the millimeter-wave sensor includes an antenna configured to emit a detection signal in a millimeter wave band and to receive a reflected wave of the emitted detection signal, the reflected wave being reflected by an object, and
wherein the antenna is provided in parallel with the first surface in the housing.

8. The detection system according to any one of claim 4 to claim 7, further comprising: an imaging direction adjustment device configured to adjust an imaging direction of the image sensor.

9. The detection system according to any one of claim 1 to claim 8, further comprising: an illumination device configured to illuminate the first area.

10. The detection system according to any one of claim 1 to claim 9, wherein the first sensor is installed on a support member provided in the first area, and
wherein the second sensor is installed on the support member on which the first sensor is installed.

11. The detection system according to any one of claim 5 to claim 9, wherein the housing is installed on a support member provided in the first area, and
wherein an installation angle adjustment device configured to adjust an installation angle of the housing is further comprised.

12. The detection system according to any one of claim 1 to claim 11, further comprising: a processing unit configured to identify a kind and a direction of the object present in the first area, based on sensor data from the first sensor and to perform a process of causing the second sensor to track the identified object in the pedestrian crossing depending on a result of identification.

13. The detection system according to claim 12, wherein the processing unit further performs a predetermined process depending on the result of identification of the object in the first area or a situation of tracking the object in the pedestrian crossing.

14. The detection system according to claim 13, wherein the predetermined process includes at least notifying a vehicle trying to enter the pedestrian crossing of presence of the object, recording a trajectory along which the object moves in the pedestrian crossing, or controlling a pedestrian traffic light provided for the pedestrian crossing.

15. A detection device comprising:
a first sensor;
a second sensor having a detection characteristic different from that of the first sensor; and
a housing configured to unitize the first sensor and the second sensor;
wherein the housing is installed on a support member provided in the first area adjacent to a pedestrian crossing, and
wherein in a state in which the housing is installed on the support member, a first detection target area in which the first sensor detects an object contains at least a portion of the first area, and a second detection target area in which the second sensor detects an object contains at least a portion of the pedestrian crossing.

16. The detection device according to claim 15, further comprising: an illumination device included in the housing and configured to illuminate the first area.

17. The detection device according to claim 15 or claim 16, wherein the first sensor includes an image sensor configured to detect an object present in the first area, and
wherein the second sensor includes a millimeter-wave sensor configured to detect an object present in the pedestrian crossing.

18. A method of installing a detection device on a support member provided above a first area adjacent to a pedestrian crossing, the detection device including an image sensor a detection target area of which is at least a portion of the first area, a millimeter-wave sensor a detection target area of which is the pedestrian crossing, a housing configured to unitize the image sensor and the millimeter-wave sensor, an installation angle adjustment device configured to adjust an installation angle of the housing with respect to the support member, and an imaging direction adjustment device configured to adjust an imaging direction of the image sensor, the method comprising:
mounting the housing on the support member;
adjusting the imaging direction of the image sensor to a detection direction of the millimeter-wave sensor in a manner in which an operator operates the imaging direction adjustment device;
adjusting the installation angle of the housing such that the detection target area of the millimeter-wave sensor contains at least a portion of the pedestrian crossing in a manner in which the operator operates the installation angle adjustment device, based on image information from the image sensor; and
adjusting the imaging direction of the image sensor such that the detection target area of the image sensor contains at least the portion of the first area in a manner in which the operator operates the imaging direction adjustment device, based on the image information from the image sensor.
